(19) Europäisches Patentamt
European Patent Office
Office européen des brevets

(11) EP 0 592 363 B1

(12) EUROPÄISCHE PATENTSCHRIFT

(45) Veröffentlichungstag und Bekanntmachung des Hinweises auf die Patenterteilung:
**10.05.2000 Patentblatt 2000/19**

(51) Int. Cl.[7]: **C08K 5/524**, C08K 5/5393, C08K 5/3435, C08K 5/3462

(21) Anmeldenummer: **93810683.8**

(22) Anmeldetag: **27.09.1993**

(54) **Erhöhung der Lagerstabilität von organischen Phosphiten und Phosphoniten**
Storage stability improvement of organic phosphites and phosphonites
Amélioration de la stabilité au stockage des phophites et des phosphonites organiques

(84) Benannte Vertragsstaaten:
**AT BE CH DE ES FR GB IT LI NL SE**

(30) Priorität: **05.10.1992 CH 310592**

(43) Veröffentlichungstag der Anmeldung:
**13.04.1994 Patentblatt 1994/15**

(73) Patentinhaber:
**Ciba Specialty Chemicals Holding Inc.**
**4057 Basel (CH)**

(72) Erfinder:
- **Quotschalla, Udo, Dr.**
  **D-64646 Heppenheim (DE)**
- **Linhart, Helmut**
  **CH-4153 Reinach (CH)**

(56) Entgegenhaltungen:

| | |
|---|---|
| **EP-A- 0 143 464** | **EP-A- 0 167 969** |
| **DE-B- 1 201 547** | **FR-A- 2 335 520** |
| **GB-A- 2 046 273** | **US-A- 3 787 537** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 592 363 B1

## Beschreibung

Die Erfindung betrifft ein Verfahren zur Stabilisierung von organischen Phosphiten und Phosphoniten gegen Hydrolyse durch Zusatz von sterisch gehinderten Aminen, Zusammensetzungen enthaltend diese beiden Komponenten, sowie die Verwendung von sterisch gehinderten Aminen als Hydrolysestabilisatoren für Phosphite und Phosphonite.

Organische Phosphite und Phosphonite finden vielfach Verwendung als Hitzestabilisatoren für synthetische Polymere.

Herstellung, Lagerung und Einsatz von Phosphiten und Phosphoniten ist jedoch dadurch erschwert, daß diese Verbindungen sehr leicht hydrolisieren. Ein besonderes Problem stellt die Lagerung des Materials bei hoher Luftfeuchtigkeit dar.

Verschiedene Methoden wurden vorgeschlagen, um zu Produkten mit verbesserter Stabilität gegenüber Hydrolyse zu gelangen; dies sind neben Herstellungsverfahren, die zu reineren Produkten führen, und Methoden zur Reinigung der Verbindungen vor allem der Zusatz spezieller Stabilisatoren, die einerseits die Hydrolyseneigung verringern und andererseits keine negativen Wirkungen bei dem späteren Einsatz der Phosphite oder Phosphonite hervorrufen.

Zu den zuletzt genannten Methoden gehört der Zusatz von Aminen als Hydrolysestabilisatoren, wie er beispielsweise in US-A-3 553 298 beschrieben ist. Weitere Publikationen zur Stabilisierung von Phosphiten mit Aminen sind US-A-3 787 537, EP-A-168 721 und EP-A-167 969. Empfohlen werden vor allem tertiäre Alkanol- und Alkylamine, Pyridine und Aniline; typische Beispiele sind Triethylamin, Diethanolamin, Triethanolamin, Di- und Triisopropanolamin (TIPA), Tetraisopropanolethylendiamin, Anilin, Phenylendiamin und Hexamethylentetramin. Die Amine werden im allgemeinen in Mengen bis zu ca. 5 Gew.-% (bezogen auf das zu stabilisierende Phosphit) eingesetzt; die Einarbeitung des Amins geschieht durch trockenes Vermahlen oder durch Lösen in oder Vermischen mit der Phosphit-Schmelze und anschließender Kristallisation.

Neben der Verbesserung der Hydrolysestabilität werden Phosphite und Phosphonite noch aus anderen Gründen mit Aminen kombiniert:

- Amine wie Pyridin, Triethylamin und Triphenylamin oder quaternäre Ammoniumsalze sind als Katalysatoren zur Herstellung von organischen Phosphiten bekannt, s.z.B. EP-A-158 300;
- es ist bekannt, zur Stabilisierung von Polymeren neben Phosphiten und Phosphoniten noch weitere Additive einzusetzen, darunter z.B. Lichtschutzmittel vom Typ der sterisch gehinderten Amine (HALS), s.z.B. EP-A-0 468 923;
- einige organische Phosphite sind bekannt, welche aminische Gruppen, darunter auch 2,2,6,6-Tetramethylpiperidyl-Gruppen, im Molekül gebunden enthalten; siehe z.B. GB-A-1 513 629 und GB-A-2 014 586.

Trotz der hier aufgeführten, bekannten Methoden zur Verbesserung der Hydrolysestabilität von organischen Phosphiten und Phosphoniten besteht Bedarf an einer weiteren Verbesserung.

Es wurde nun gefunden, daß durch den Zusatz von sterisch gehinderten Aminen eine überraschende Verbesserung der Hydrolysestabilität organischer Phosphite und Phosphonite erzielt werden kann. Gegenstand der Erfindung ist daher ein Verfahren zur Stabilisierung eines organischen Phosphits oder Phosphonits oder eines Gemisches organischer Phosphite oder Phosphonite gegen Hydrolyse, dadurch gekennzeichnet, daß man als Stabilisator eine Verbindung aus der Klasse der sterisch gehinderten Amine zusetzt, so daß das stabilisierte Phosphit oder Phosphonit 0,1 bis 25 Gew.-% der aminischen Verbindung (bezogen auf Phosphit bezw. Phosphonit) enthält.

Im Allgemeinen sind dem erfindungsgemäß stabilisierten organischen Phosphit oder Phosphonit 0,1 bis 15 Gew.-% sterisch gehindertes Amin zugesetzt, vorzugsweise enthält das stabilisierte Phosphit oder Phosphonit das sterisch gehinderte Amin in einer Menge von 0,1 bis 8, besonders 0,1 bis 5, vor allem in einer Menge von 0,2 bis 2,5 Gew.-%, jeweils bezogen auf Phosphit bezw. Phosphonit.

Ändert man die Bezugsgröße auf Phosphit plus Amin bezw. Phosphonit plus Amin, so beträgt der Amingehalt 0,1 bis 20; im Allgemeinen 0,1 bis 13; vorzugsweise 0,1 bis 7,4; besonders 0,1 bis 4,8; vor allem 0,2 bis 2,4 Gew.-%.

Das sterisch gehinderte Amin kann eine Einzelverbindung oder ein Gemisch von Verbindungen sein. Im Fall eines Verbindungsgemisches bezeichnen die Mengenangaben jeweils die Gesamtmenge der eingesetzten sterisch gehinderten Amine.

Unter Phosphiten oder organischen Phosphiten sind hier Verbindungen der Formel $P(OR)_3$ zu verstehen, worin die Reste R Kohlenwasserstoffreste sind, welche Heteroatome enthalten können, und darüberhinaus maximal zwei der drei Reste R Wasserstoffatome darstellen können. Heteroatome sind alle Atome mit Ausnahme von Kohlenstoff und Wasserstoff, insbesondere die Atome N, O, F, Si, P, S, Cl, Br, Sn und I.

Phosphonite sind Ester der Phosphonigen Säure mit der Formel $P(OR)_2R$, worin R die oben angegebenen Bedeutungen hat oder Halogen bedeuten kann.

Vorzugsweise handelt es sich bei dem Phosphit oder Phosphonit um einen Feststoff.

Das sterisch gehinderte Amin kann dem reinen Phosphit oder Phosphonit durch übliche Mischvorgänge, oder beispielsweise durch gemeinsames Vermahlen zugesetzt werden. Zweckmäßig wird das sterisch gehinderte Amin der Lösung oder Schmelze des Phosphits oder Phosphonits vor dessen Kristallisation zugemischt, beispielsweise der aus der Synthese stammenden Lösung. Möglich ist auch, das sterisch gehinderte Amin während der Synthese oder einem der Edukte zuzusetzen.

In einer bevorzugten Ausführungsform liegt das sterisch gehinderte Amin in der Lösung oder Schmelze vor, aus der das Phosphit oder Phosphonit kristallisiert wird. In diesem Fall beträgt die Menge an beigemischtem sterisch gehindertem Amin in der Lösung oder Schmelze meist 0,1 bis 50 Gew.-%; vorzugsweise werden 0,1 bis 25 Gew.-%, vor allem 0,5 bis 20 Gew.-% (jeweils bezogen auf Phosphit bezw. Phosphonit) eingesetzt.

Aus der Lösung oder Schmelze kann anschließend in bekannter Weise das kristalline Phosphit bezw. Phosphonit gewonnen werden, beispielsweise durch Abkühlen und/oder Konzentrieren. Es ist möglich, die Kristallisation durch den Eintrag von Impfkristallen zu beschleunigen. Ein Konzentrieren der Lösung kann beispielsweise durch Erhitzen, Anwendung von reduziertem Druck, Verwendung von Schleppmitteln und/oder Ausfrieren des Lösungsmittels (Cold Trapping) erreicht werden. Gegebenenfalls können weitere übliche Aufarbeitungsvorgänge wie Filtrieren, Trocknen oder Mahlen angeschlossen werden.

Das Produkt des erfindungsgemäßen Verfahrens enthält vorzugsweise Mischkristalle aus gehindertem Amin und Phosphit bezw. Phosphonit. Bevorzugt machen diese Mischkristalle mindestens 50 Gew.-%, insbesondere mindestens 80 Gew.-% des Produktes aus.

Zweckmäßig werden gemäß dem erfindungsgemäßen Verfahren dem Phosphit bezw. Phosphonit als weitere Komponenten keine organischen Polymere, beispielsweise solche mit einem Molekulargewicht größer als 5000, zugesetzt.

Unter einem sterisch gehinderten Amin ist hier ein cyclisches sterisch gehindertes Amin aus der Reihe der Derivate von Polyalkylpiperidinen oder -piperazinen zu verstehen, die mindestens eine Gruppe der Formeln II oder III

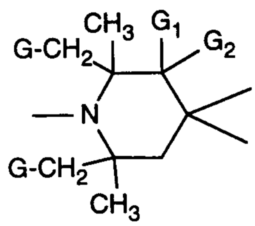

(II)

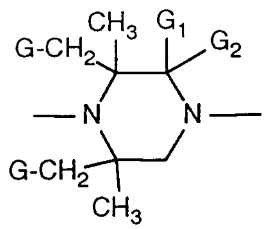

(III)

enthalten, worin G Wasserstoff oder Methyl ist und $G_1$ und $G_2$ Wasserstoff, Methyl oder gemeinsam einen Substituenten =O bedeuten; vorzugsweise sind die Polyalkylpiperidin- oder -piperazingruppen der Formel II oder III in 4-Stellung mit einem oder zwei polaren Substituenten oder einen polaren Spiro-Ringsystem substituiert.

Von Bedeutung ist ein Verfahren, worin als Amin ein cyclisches sterisch gehindertes Amin eingesetzt wird, das mindestens eine Gruppe der Formeln II oder III enthält, worin G Wasserstoff ist und $G^1$ und $G^2$ Wasserstoff oder gemeinsam einen Substituenten =O bedeuten.

Besonders zweckmäßig werden im erfindungsgemäßen Verfahren Derivate des 2,2,6,6-Tetramethylpiperidins eingesetzt.

Von Bedeutung ist insbesondere die Verwendung der im folgenden unter (a) bis (h) beschriebenen Klassen von Polyalkylpiperidinen, die mindestens eine Gruppe der Formel II oder III, wie oben angegeben, tragen:

(a) Verbindungen der Formel IV

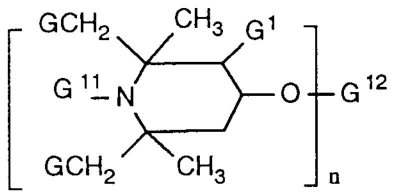

(IV),

worin n eine Zahl von 1 bis 4 bedeutet, G und $G^1$ unabhängig voneinander Wasserstoff oder Methyl bedeuten,
$G^{11}$ Wasserstoff, Oxyl, Hydroxyl, $C_1$-$C_{18}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)$-Z, worin Z Wasserstoff, Methyl oder Phenyl ist, bedeutet, wobei
$G^{11}$ vorzugsweise H, $C_1$-$C_4$-Alkyl, Allyl, Benzyl, Acetyl oder Acryloyl ist und
$G^{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wobei die Carbonsäure jeweils im aliphatischen, cycloaliphatischen oder aromatischen Teil mit 1 bis 3 Gruppen -$COOZ^{12}$ substituiert sein kann, worin $Z^{12}$ H, $C_1$-$C_{20}$-Alkyl, $C_3$-$C_{12}$-Alkenyl, $C_5$-$C_7$-Cycloalkyl, Phenyl oder Benzyl ist,
wenn n 2 ist, $C_2$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wobei die Dicarbonsäure jeweils im aliphatischen, cycloaliphatischen oder aromatischen Teil mit 1 oder 2 Gruppen -$COOZ^{12}$ substituiert sein kann,
wenn n 3 ist, einen dreiwertigen Rest einer aliphatischen, cycloaliphatischen oder aromatischen Tricarbonsäure, der im aliphatischen, cycloaliphatischen oder aromatischen Teil mit -$COOZ^{12}$ substituiert sein kann, einer aromatischen Tricarbaminsäure oder einer Phosphor enthaltenden Säure oder einen dreiwertigen Silylrest bedeutet
und wenn n 4 ist, einen vierwertigen Rest einer aliphatischen, cycloaliphatischen oder aromatischen Tetracarbonsäure bedeutet.

Unter den angegebenen Carbonsäureresten sind dabei jeweils Reste der Formel $(-CO)_nR$, wobei die Bedeutung von n oben angegeben ist, und sich die Bedeutung von R aus der angegebenenen Definition ergibt.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $G^{11}$ oder $G^{12}$ z.B. die oben angeführten Gruppen und dazu noch beispielsweise n-Tridecyl, n-Tetradecyl, n-Hexadecyl oder n-Octadecyl darstellen.

Wenn $G^{11}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert-Butyl-2-butenyl handeln.

$G^{11}$ ist als $C_3$-$C_8$-Alkinyl bevorzugt Propargyl.

Als $C_7$-$C_{12}$-Aralkyl ist $G^{11}$ insbesondere Phenethyl und vor allem Benzyl.

$G^{11}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $G^{12}$ einen einwertigen Rest einer Carbonsäure, so stellt es beispielsweise einen Essigsäure-, Capronsäure-, Stearinsäure-, Acryl-säure-, Methacrylsäure-, Benzoe- oder $\beta$-(3,5-Di-tert.-butyl-4-hydroxy- phenyl)-propionsäurerest dar.

Bedeutet $G^{12}$ einen einwertigen Silylrest, so stellt es beispielsweise einen Rest der Formel $-(C_jH_{2j})-Si(Z')_2Z''$ dar, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten.

Bedeutet $G^{12}$ einen zweiwertigen Rest einer Dicarbonsäure, so stellt es beispielsweise einen Malonsäure-, Bernsteinsäure-, Glutarsäure-, Adipin- säure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $G^{12}$ einen dreiwertigen Rest einer Tricarbonsäure dar, so bedeutet es z.B. einen Trimellitsäure-, Citronensäure- oder Nitrilotriessigsäurerest.

Stellt $G^{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $G^{12}$ einen zweiwertigen Rest einer Dicarbaminsäure, so stellt es beispielsweise einen Hexamethylendicarbaminsäure- oder einen 2,4-Toluylen-dicarbaminsäurerest dar. Bevorzugt sind Verbindungen der Formel IV, worin G Wasserstoff ist, $G^{11}$ Wasserstoff oder Methyl ist, n 2 ist und $G^{12}$ der Diacylrest einer aliphatischen Dicarbonsäure mit 4-12 C-Atomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethyl-piperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b) Verbindungen der Formel (V)

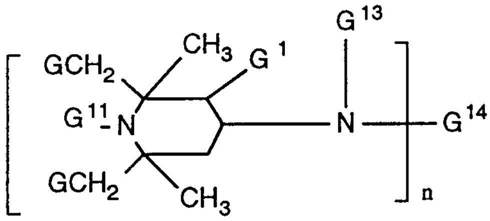

(V)

worin n die Zahl 1 oder 2 bedeutet, G, $G^1$ und $G^{11}$ die unter (a) angegebene Bedeutung haben,
$G^{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

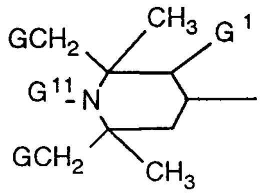

ist und
$G^{14}$, wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel -CONH-Z ist, worin Z Wasserstoff, Methyl oder Phenyl bedeutet;
wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, daß $G^{13}$ nicht Alkanoyl, Alkenoyl oder Benzoyl bedeutet, $G^{14}$ auch 1-Oxo-$C_2$-$C_{12}$-alkylen, einen zweiwertigen Rest einer aliphatischen, cycloaliphatischen oder aromatischen Dicarbonsäure oder Dicarbaminsäure oder auch die Gruppe -CO- bedeuten kann, oder,
wenn n 1 ist, $G^{13}$ und $G^{14}$ zusammen den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter (a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $G^{13}$ insbesondere Phenylethyl oder vor allem Benzyl. Als $C_2$-$C_5$-Hydroxyalkyl ist $G^{13}$ insbesondere 2-Hydroxyethyl oder 2-Hydroxypropyl.

$G^{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $G^{14}$ $C_2$-$C_8$-Alkenyl, dann handelt es sich z.B. um Allyl, Methallyl, 2-Butenyl, 2-Pentenyl, 2-Hexenyl oder 2-Octenyl.

$G^{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist insbesondere Cyclohexylen zu nennen.

Bevorzugt sind Verbindungen der Formel V, worin n 1 oder 2 ist, G Wasserstoff ist, $G^{11}$ Wasserstoff oder Methyl ist, $G^{13}$ Wasserstoff, $C_1$-$C_{12}$-Alkyl oder eine Gruppe der Formel

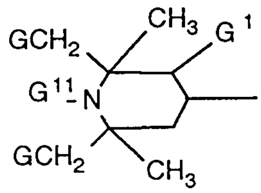

ist und $G^{14}$ im Fall von n=1 Wasserstoff oder $C_1$-$C_{12}$-Alkyl ist, und im Fall von n=2 $C_2$-$C_8$-Alkylen oder 1-Oxo-$C_2$-$C_8$-alkylen ist.

Beispiele für Polyalkylpiperidin-Verbindungen dieser Klasse sind folgende Verbindungen:

37) N,N'-Bis-(2,2,6,6-tetramethylpiperidin4-yl)-hexamethylen-1,6-diamin
38) N,N'-Bis-(2,2,6,6-tetramethylpiperidin-4-yl)-hexamethylen-1,6-di-acetamid
39) Bis-(2,2,6,6-tetramethylpiperidin4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethyl-piperidin-4-yl)-ester
46) Die Verbindung der Formel

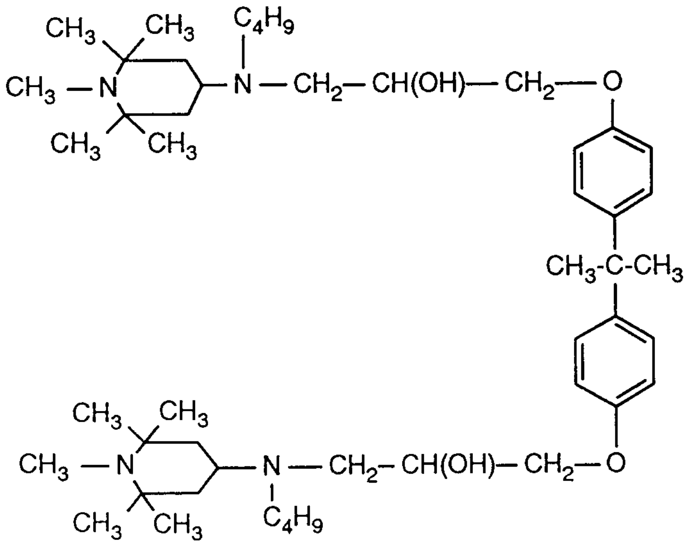

47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetra-methylpiperidin
49) 4-Methacrylamido-1,2,2,6,6-pentamethylpiperidin

(c) Verbindungen der Formel (VI)

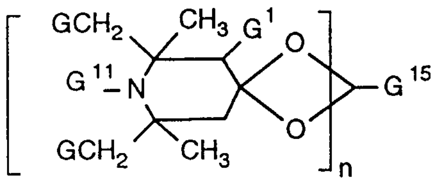

(VI)

worin n die Zahl 1 oder 2 bedeutet, G, $G^1$ und $G^{11}$ die unter (a) angegebene Bedeutung haben und $G^{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.

Bedeutet $G^{15}$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$-Acyloxyalkylen bedeutet $G^{15}$ z.B. 2-Ethyl-2-acetoxymethylpropylen.

Beispiele für Polyalkylpiperidin-Verbindungen dieser Klasse sind folgende Verbindungen:

50) 9-Aza-8,8,10,10-tetramethyl-1,5-dioxaspiro[5.5]undecan
51) 9-Aza-8,8,10,10-tetramethyl-3-ethyl- l,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8, 10,10-tetramethyl-1,5-dioxaspiro[5.5]-undecan
55) 2,2,6,6-Tetramethylpiperidin-4-spiro-2'-(1',3'-dioxan)-5'-spiro-5"-(1",3"-dioxan)-2"-spiro-4'"-(2'",2'",6'",6'"-tetramethylpiperidin).

(d) Verbindungen der Formeln VIIA, VIIB und VIIC, wobei Verbindungen der Formel VIIC bevorzugt sind,

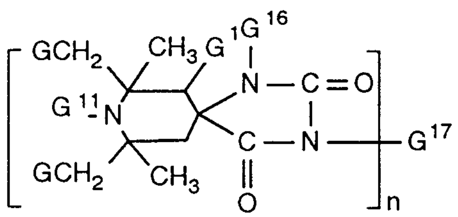

(VIIA)

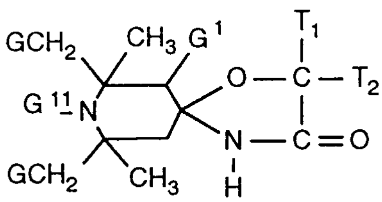

(VIIB)

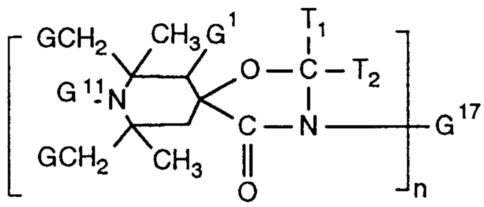

(VIIC)

worin n die Zahl 1 oder 2 bedeutet, G, $G^1$ und $G^{11}$ die unter (a) angegebene Bedeutung haben,
$G^{16}$ Wasserstoff, $C_1$-$C_{12}$-Alkyl, Allyl, Benzyl, Glycidyl oder $C_2$-$C_6$-Alkoxyalkyl ist und
$G^{17}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$ Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)p-COO-Q$ oder der Formel $-(CH_2)p-O-CO-Q$ ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2-CH(OH)-CH_2-O-D-O-CH_2-CH(OH)-CH_2-$, worin D $C_2$-$C_{10}$ Alkylen, $C_6$-$C_{15}$-Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$-Alkyl, Allyl, Benzyl, $C_2$-$C_{12}$-Alkanoyl oder Benzoyl ist,
$T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder
$T_1$ und $T_2$ zusammen mit dem sie bindenden C-Atom einen $C_5$-$C_{14}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $G^{17}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $G^{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $G^{17}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $G^{17}$, $T_1$ und $T_2$ insbesondere Phenyl, $\alpha$- oder $\beta$-Naphthyl, die gegebenenfalls mit Halogen oder $C_1$-$C_4$-Alkyl substituiert sind.

Stellt $G^{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $G^{17}$ insbesondere 2-Butenylen, 2-Pentenylen oder 3-Hexenylen.

Bedeutet $G^{17}$ $C_6$-$C_{12}$ Arylen, so stellt es beispielsweise o-, m- oder p-Phenylen, 1,4-Naphthylen oder 4,4'-Diphenylen dar.

Bedeutet Z' $C_2$-$C1_2$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter (b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro-[4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4,5]decan
und bevorzugt:
65) 8-Acetyl-3-dodecyl-1,3,8-triaza-7,7,9,9-tetramethylspiro[4,5]-decan-2,4-dion oder die Verbindungen der folgenden Formeln:

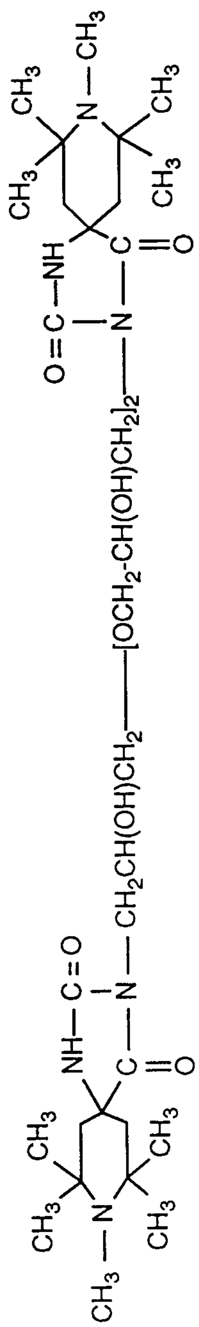

66)

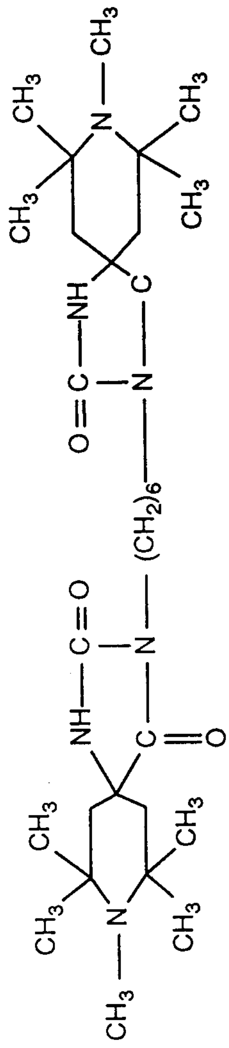

67)

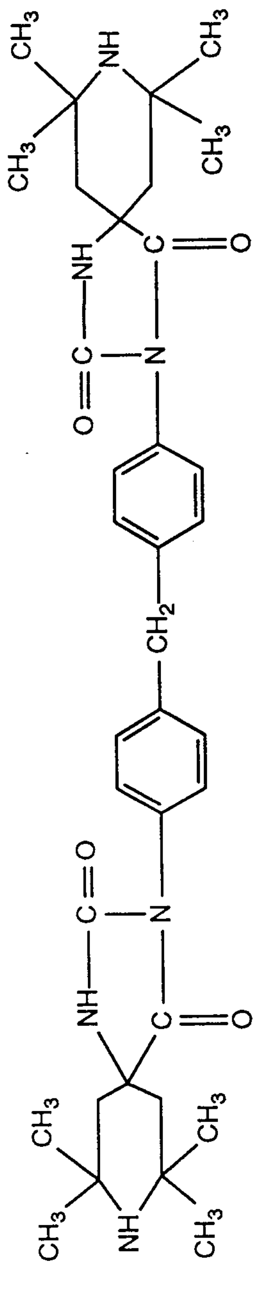

68)

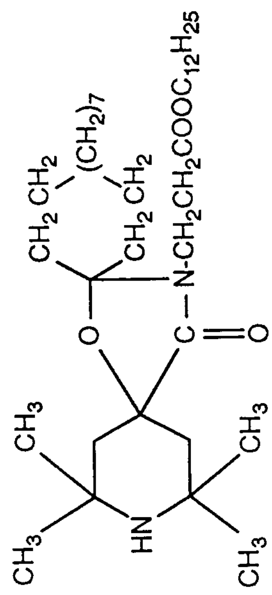

69)

(e) Verbindungen der Formel VIII, die ihrerseits bevorzugt sind,

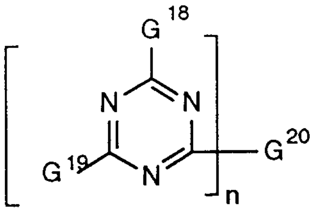

(VIII),

worin n die Zahl 1 oder 2 ist und $G^{18}$ eine Gruppe einer der Formeln

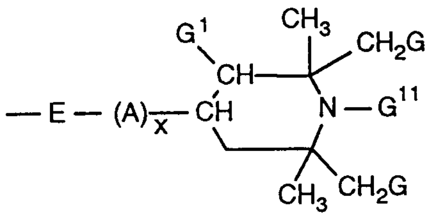

oder

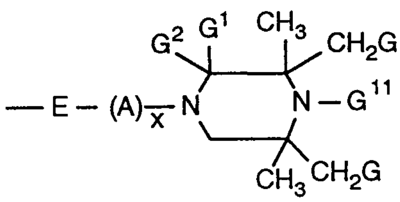

bedeutet, worin G und $G^{11}$ die unter (a) angegebene Bedeutung haben und $G^1$ und $G^2$ Wasserstoff, Methyl oder gemeinsam einen Substituenten =O bedeuten,
E -O- oder $-NG^{13}-$ ist, A $C_2$-$C_6$-Alkylen oder $-(CH_2)_3-O-$ und x eine der Zahlen O oder 1 bedeuten,
$G^{13}$ Wasserstoff, $C_1$-$C_{12}$-Alkyl, $C_2$-$C_5$-Hydroxyalkyl oder $C_5$-$C_7$-Cycloalkyl darstellt,
$G^{19}$ gleich $G^{18}$ oder eine der Gruppen $-NG^{21}G^{22}$, $-OG^{23}$, $-NHCH_2OG^{23}$ oder $-N(CH_2OG^{23})_2$ ist,
$G^{20}$, wenn n = 1 ist, gleich $G^{18}$ oder $G^{19}$, und wenn n = 2 ist, eine Gruppe - E-B-E- ist,
worin B $C_2$-$C_8$-Alkylen oder durch 1 oder 2 Gruppen $-N(G^{21})-$ unterbrochenes $C_2$-$C_8$-Alkylen bedeutet,
$G^{21}$ $C_1$-$C_{12}$-Alkyl, Cyclohexyl, Benzyl oder $C_1$-$C_4$-Hydroxyalkyl oder eine Gruppe der Formel

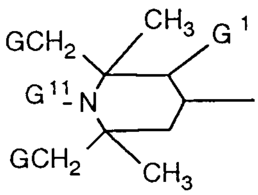

ist, $G^{22}$ $C_1$-$C_{12}$ Alkyl, Cyclohexyl, Benzyl, $C_1$-$C_4$ Hydroxyalkyl und $G^{23}$ Wasserstoff, $C_1$-$C_{12}$ Alkyl oder Phenyl bedeuten oder $G^{21}$ und $G^{22}$ zusammen $C_4$-$C_5$-Alkylen oder -Oxaalkylen, beispielsweise

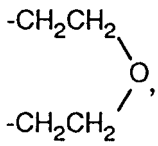

,

oder eine Gruppe der Formel

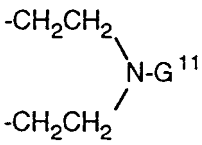

sind, oder $G^{21}$ eine Gruppe der Formel

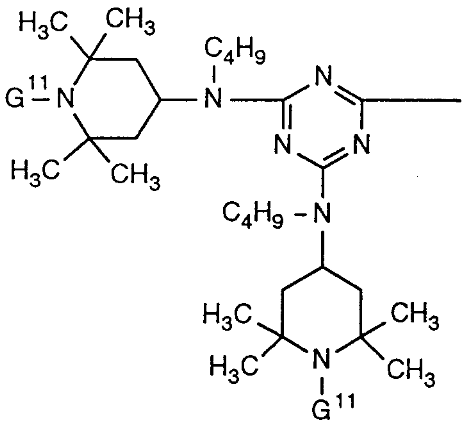

bedeutet.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $G^{21}$ und $G^{22}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

70) 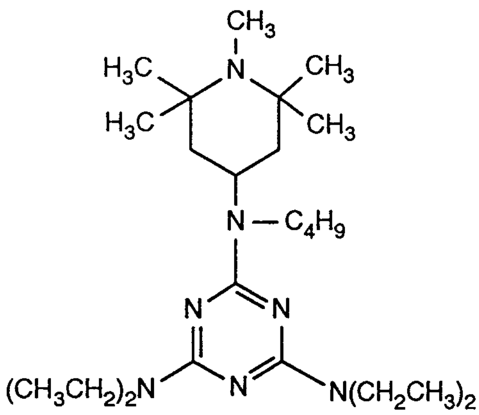

71) 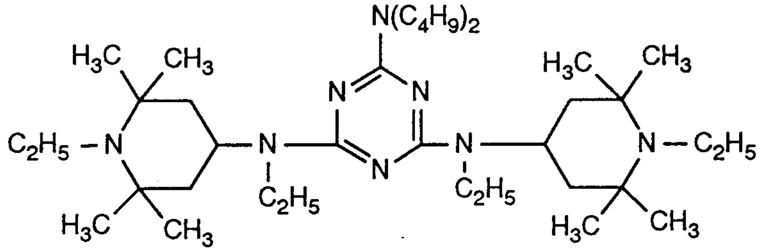

72) 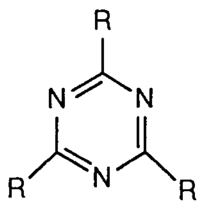 mit 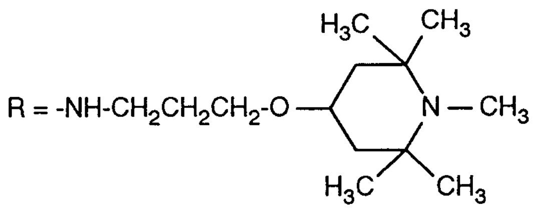

73) 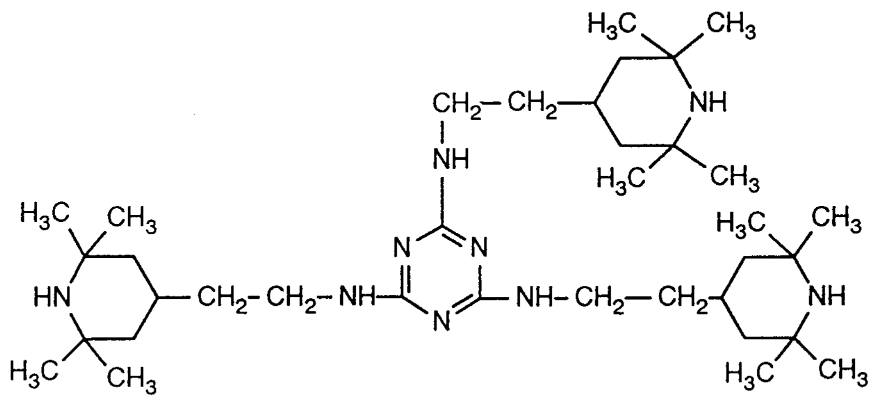

74) 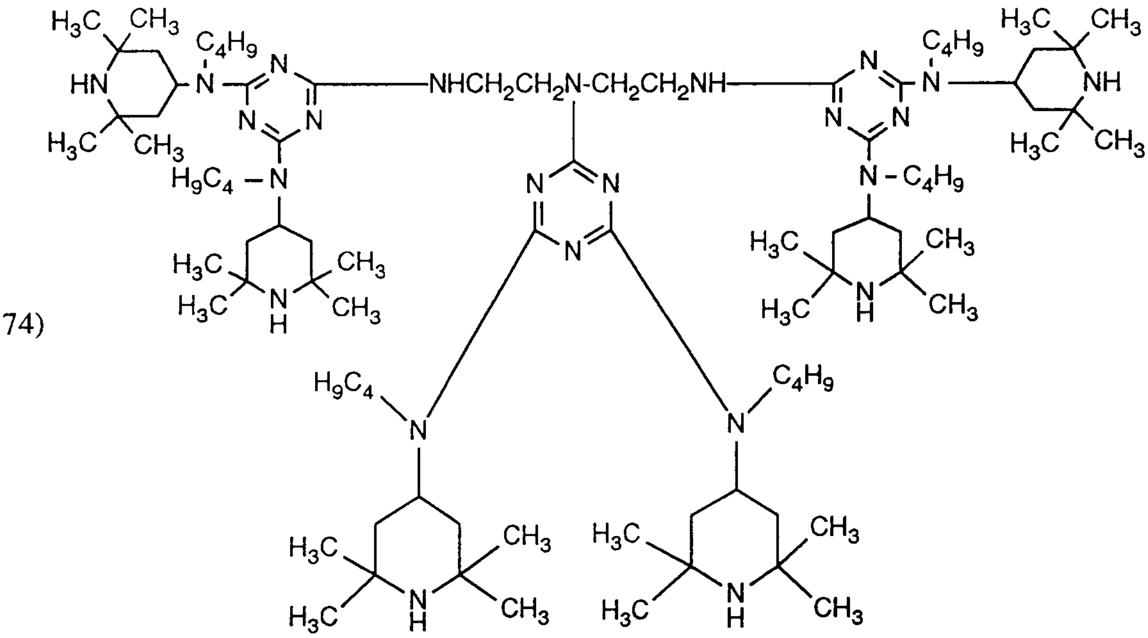

75) 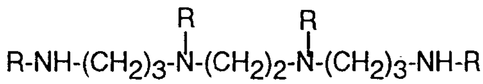

mit R = 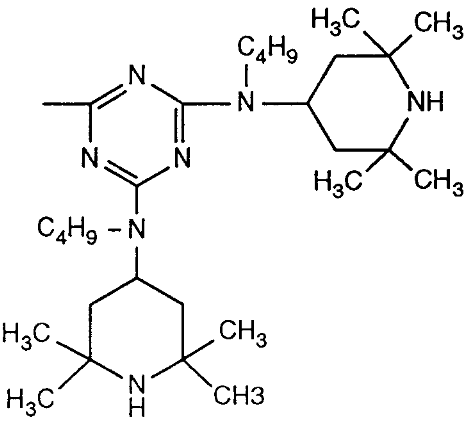

76) 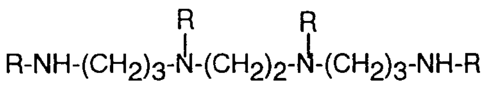 (Amin J)

mit R =

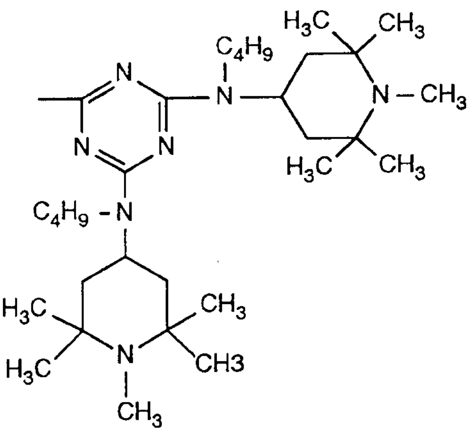

77)

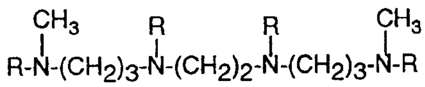

mit R =

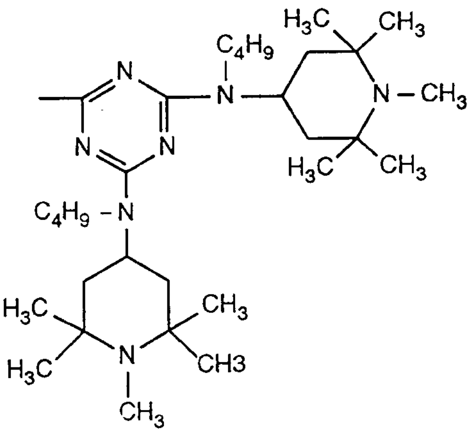

78)

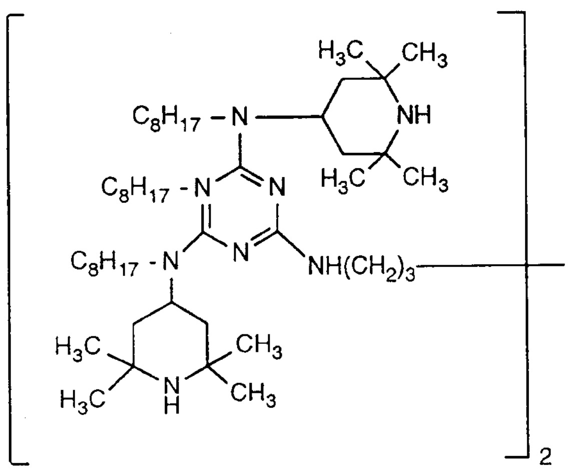

79)

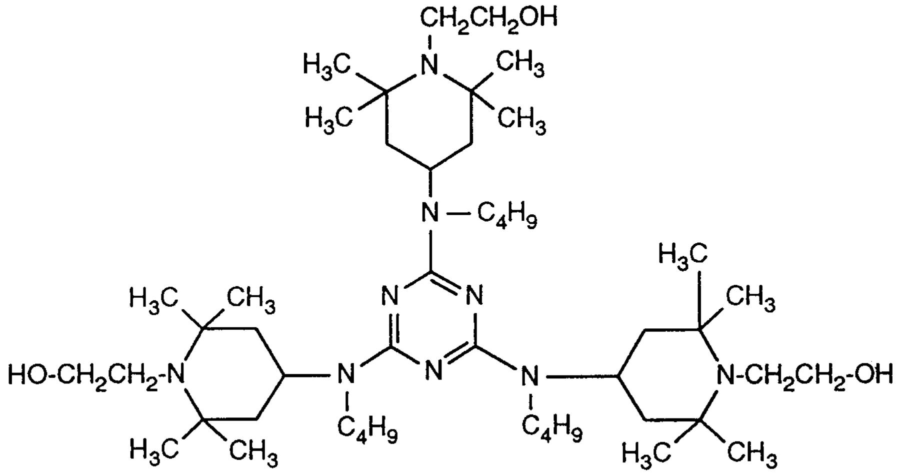

(80)

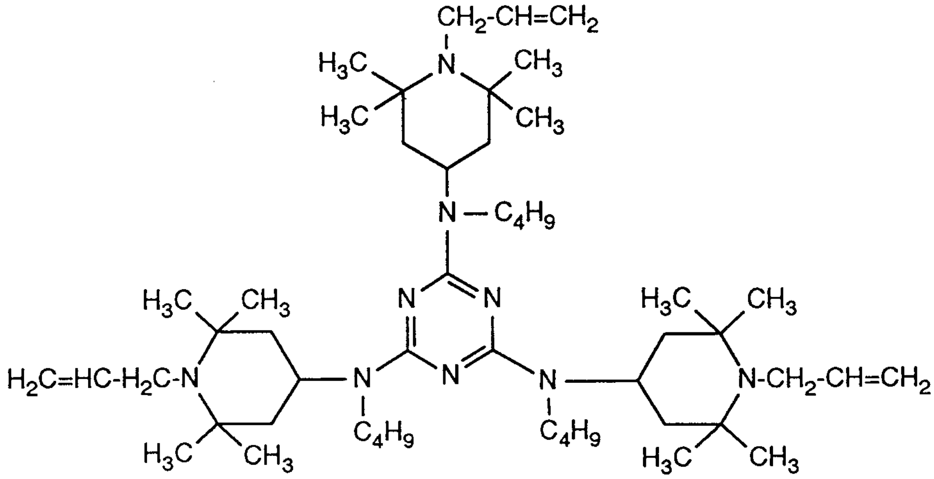

(f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

(81) 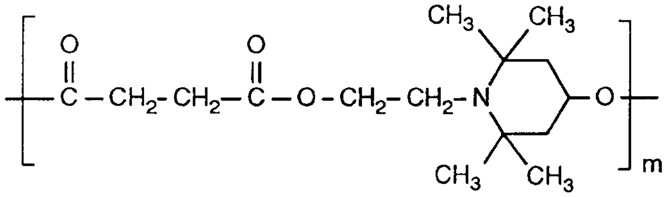

82)

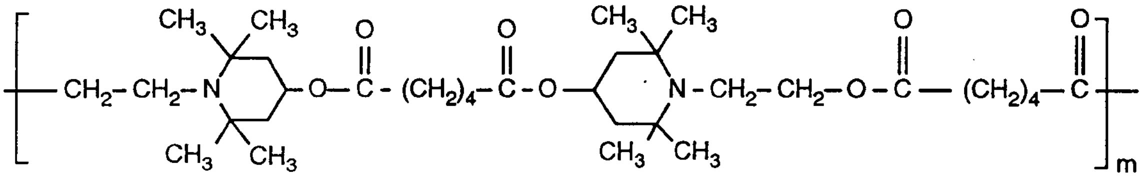

83)

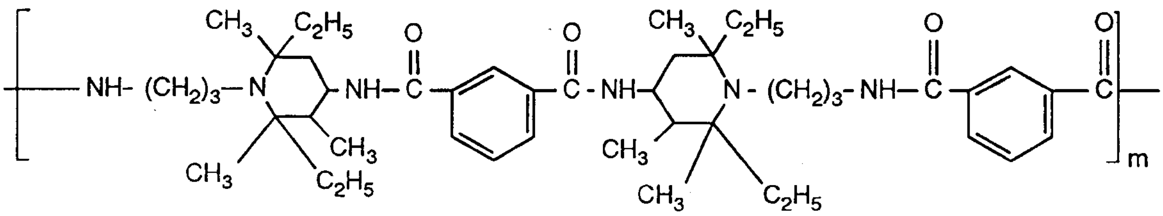

(84) 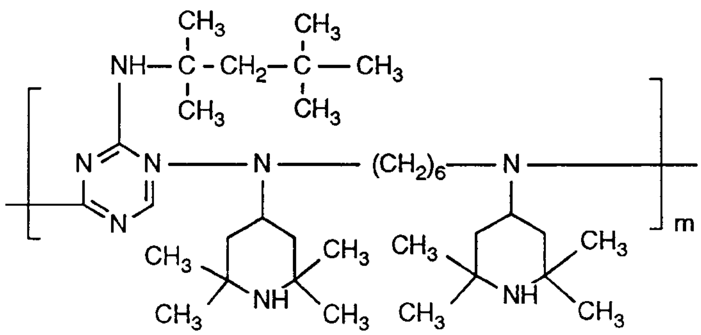

(85) 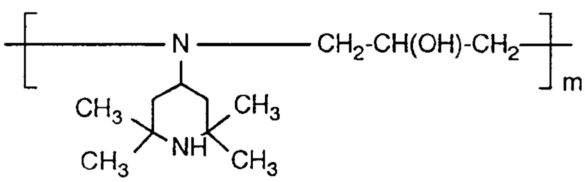

(86)

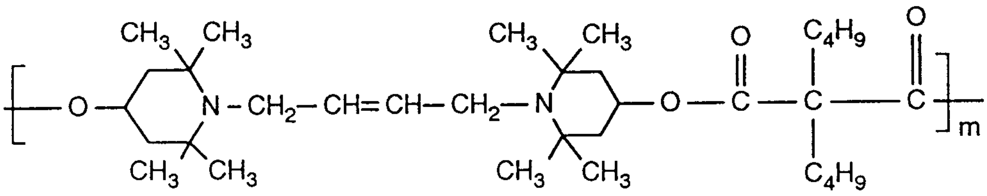

(87)

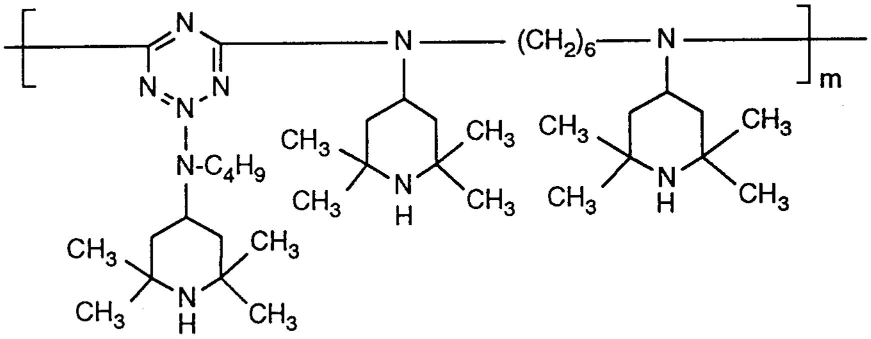

(88)

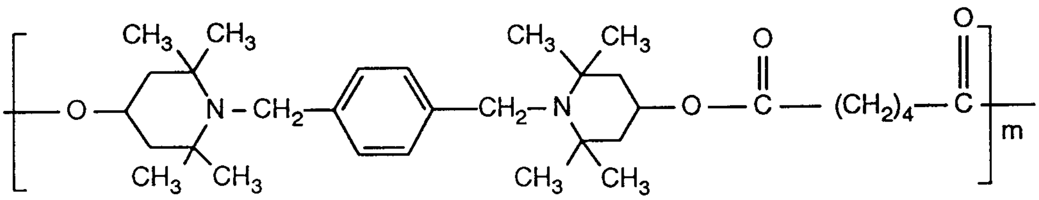

(89)

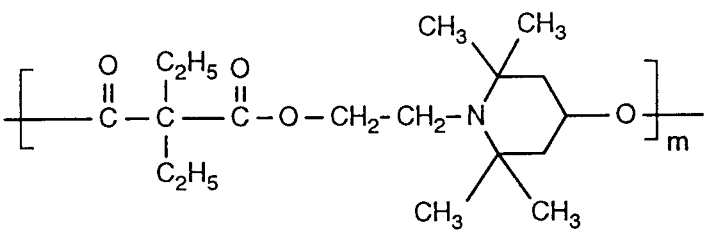

90)

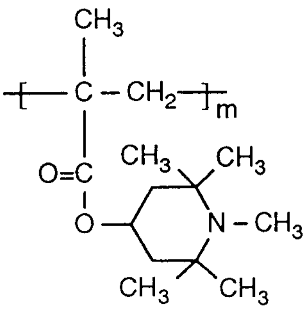

91) 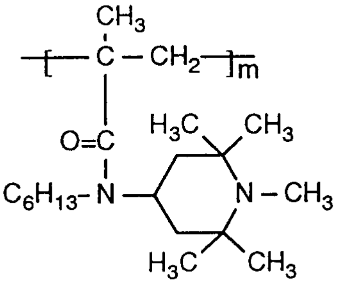

92) 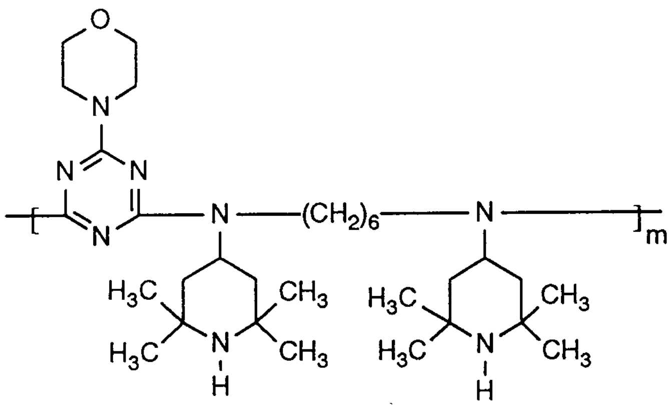

93) 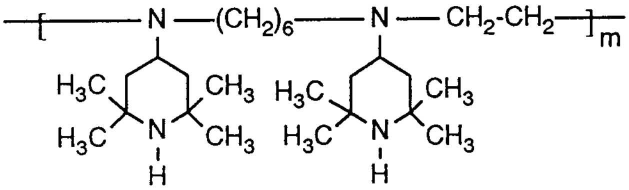

94) 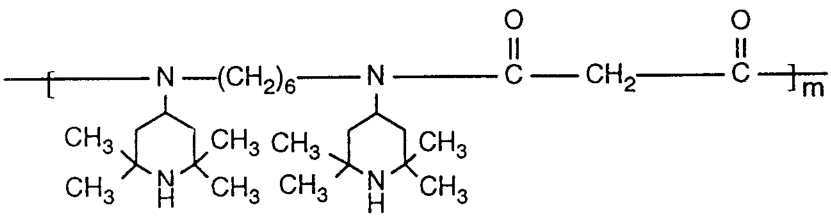

95) 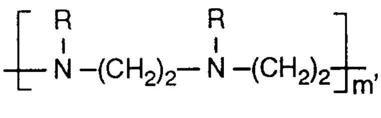

wobei R = 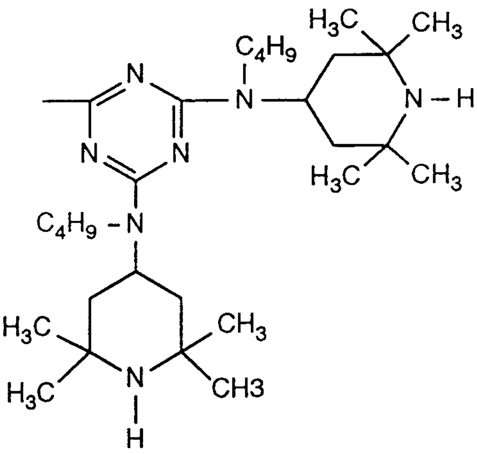

ist oder für

eine Verzweigung der Kette

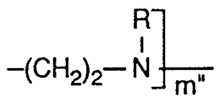

steht, m' und m" jeweils eine ganze Zahl aus dem Bereich 0-200 bedeuten mit der Bedingung m' + m" = m .

Weitere Beispiele für polymere Lichtschutzmittel sind Umsetzungsprodukte von Verbindungen der Formel

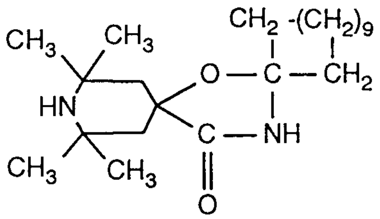

mit Epichlorhydrin;

Polyester aus Butan-1,2,3,4-tetracarbonsäure mit einem bifunktionellen Alkohol der Formel

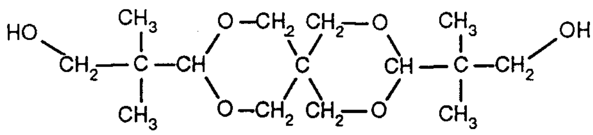 ,

dessen von der Tetracarbonsäure stammenden Carboxyl-Seitenketten mit 2,2,6,6-Tetramethyl-4-hydroxy-piperidin verestert sind;

Verbindungen der Formel

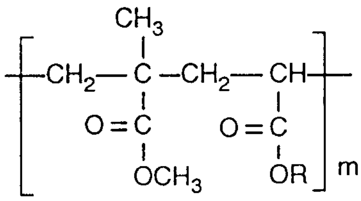,

wobei ca. ein Drittel der Reste R die Bedeutung $-C_2H_5$ haben und die anderen

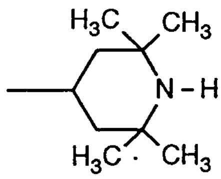

bedeuten und m eine Zahl aus dem Bereich von 2 bis 200 ist; oder Copolymerisate, deren Wiederkehrende Einheit aus 2 Einheiten

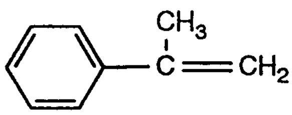

und jeweils 1 Einheit

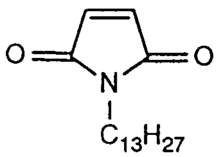 und 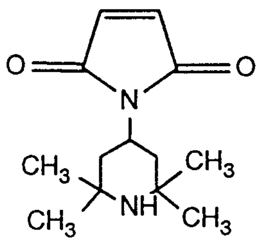

aufgebaut ist.

(g) Verbindungen der Formel IX

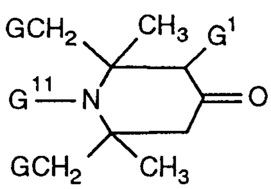

(IX)

worin G, $G^1$ und $G^{11}$ die unter (a) angegebene Bedeutung haben.

Bevorzugt sind Verbindungen der Formel IX, worin G Wasserstoff oder Methyl ist und $G^{11}$ Wasserstoff oder Methyl ist.

Beispiele für solche Verbindungen sind:

96) 2,2,6,6-Tetramethyl-4-piperidon (Triacetonamin)

97) 1,2,2,6,6-Pentamethyl-4-piperidon

98) 2,2,6,6-Tetramethyl-4-piperidon-1-oxyl

99) 2,3,6-Trimethyl-2,6-diethyl-4-piperidon

(h) Verbindungen der Formel X

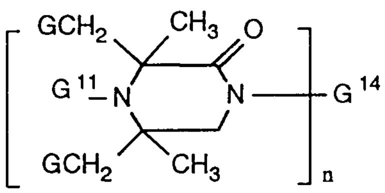

(X)

worin n die Zahl 1 oder 2 bedeutet und worin G und $G^{11}$ die unter (a), und $G^{14}$ die unter (b) angegebene Bedeutung haben, wobei für $G^{14}$ die Bedeutungen -CONH-Z und $-CH_2-CH(OH)-CH_2-O-D-O-$ ausgeschlossen sind.

Beispiele für solche Verbindungen sind:

100) 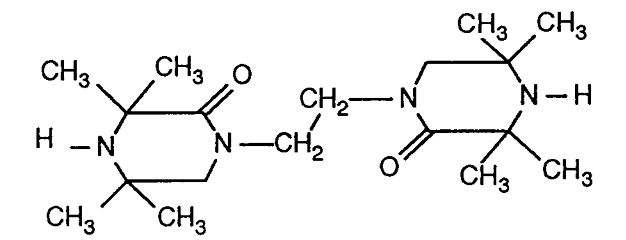 (Amin M)

101) 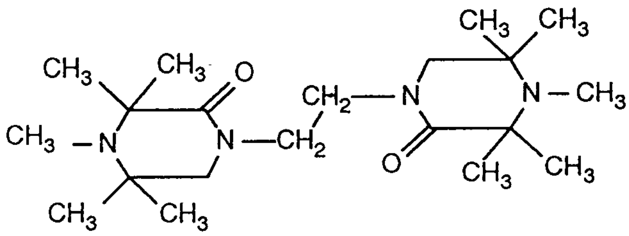

102) 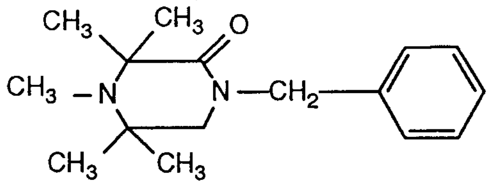

Besonders bevorzugt zur Verwendung im erfindungsgemäßen Verfahren sind die folgenden Amine:

Verbindungen der Formel IV, worin n eine ganze Zahl aus dem Bereich von 1 bis 4 bedeutet, G und $G^1$ Wasserstoff sind und

$G^{11}$ Wasserstoff oder $C_1$-$C_{18}$-Alkyl und

$G^{12}$, wenn n = 1 ist, einen Rest der Formel $-(C_jH_{2j})-Si(Z')_2Z''$, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten, darstellt und

$G^{12}$, wenn n = 2 ist, einen Rest einer aliphatischen Dicarbonsäure mit 2 bis 12 C-Atomen, der durch $-COOZ^{12}$ substituiert sein kann, wobei $Z^{12}$ $C_1$-$C_{20}$-Alkyl ist,

$G^{12}$, wenn n = 3 ist, einen Rest einer aromatischen Tricarbonsäure mit 9 bis 15 C-Atomen,

$G^{12}$, wenn n = 4 ist, einen Rest einer aliphatischen Tetracarbonsäure mit 8 bis 12 C-Atomen darstellt; Amine von besonderem technischem Interesse aus dieser Klasse sind solche der Formeln

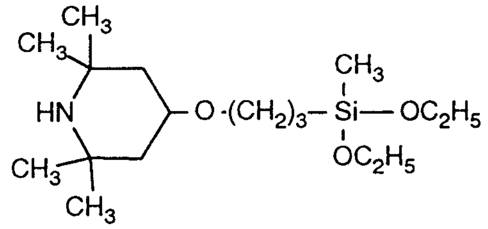

(Amin B),

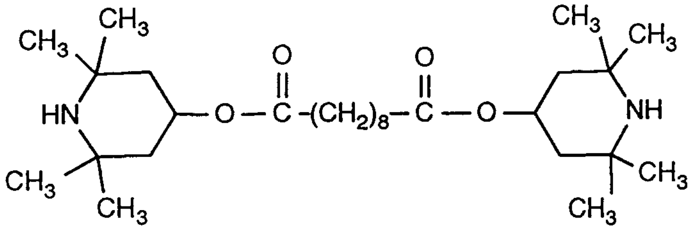

(Amin C),

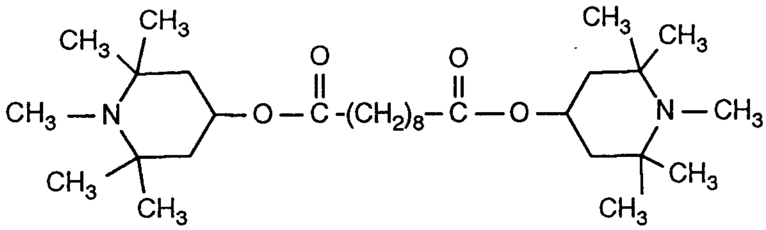

(Amin D),

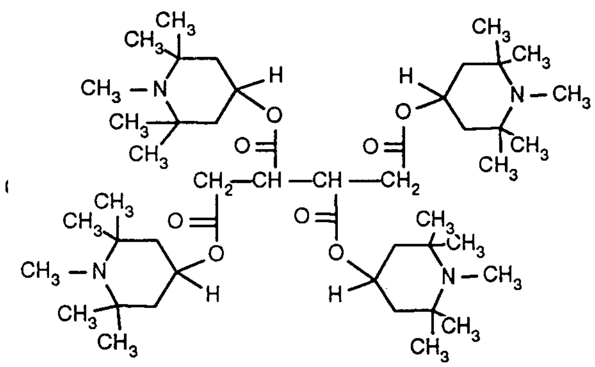

(Amin E),

sowie
Ester der Butan-1,2,3,4-tetracarbonsäure mit je 2 Einheiten 1,2,2,6,6-Pentamethyl-4-hydroxy-piperidin und $C_{13}H_{27}$-OH (Amin F);

Verbindungen der Formel V, worin n 2 ist, G und $G^1$ Wasserstoff sind,

$G^{11}$ Wasserstoff oder Methyl und
$G^{13}$ Wasserstoff oder $C_1$-$C_8$-Alkyl bedeuten, und
$G^{14}$ $C_2$-$C_8$-Alkylen oder 1-Oxo-$C_2$-$C_8$-alkylen ist; ein Amin von besonderem technischem Interesse aus dieser Klasse ist die Verbindung der Formel

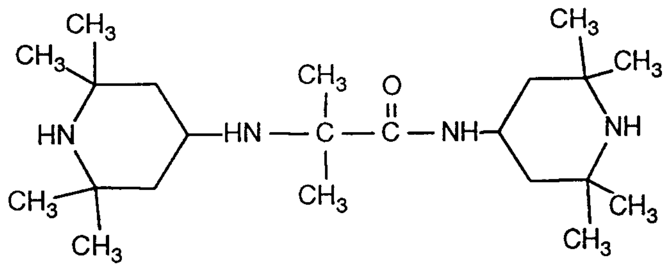 (Amin G);

Verbindungen der Formel VIIC, worin n 1 ist, G,$G^1$ und $G^{17}$ Wasserstoff sind,

$G^{11}$ Wasserstoff oder Methyl bedeutet, und
$T_1$ und $T_2$ zusammen mit dem sie bindenden C-Atom einen $C_5$-$C_{14}$-Cycloalkanring bilden; ein Amin von besonderem technischem Interesse aus dieser Klasse ist die Verbindung der Formel

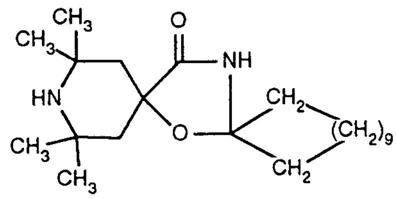 (Amin H);

Verbindungen der Formel VIII, worin n 1 oder 2 ist,

$G^{18}$ und $G^{19}$ eine Gruppe einer der Formeln

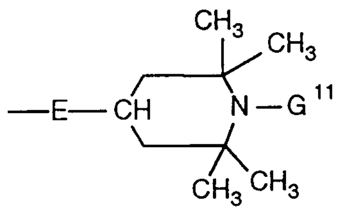 oder 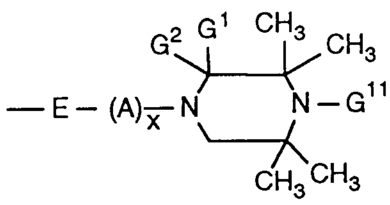

bedeuten,
$G^{11}$ Wasserstoff oder Methyl ist,
$G^1$ und $G^2$ Wasserstoff oder gemeinsam einen Substituenten =O bedeuten, E -O- oder -$NG^{13}$- ist, A $C_2$-$C_6$-Alkylen und x eine der Zahlen O oder 1 bedeuten,
$G^{13}$ Wasserstoff, $C_1$-$C_{12}$-Alkyl oder Cyclohexyl darstellt,
$G^{20}$, wenn n = 1 ist, gleich $G^{18}$, und wenn n = 2 ist, eine Gruppe -E-B-E- ist, worin B $C_2$-$C_8$-Alkylen oder durch 1 oder 2 Gruppen -N($G^{21}$)- unterbrochenes $C_2$-$C_8$-Alkylen bedeutet,
$G^{21}$ $C_1$-$C_{12}$-Alkyl, Cyclohexyl, Benzyl oder $C_1$-$C_4$-Hydroxyalkyl oder eine Gruppe der Formel

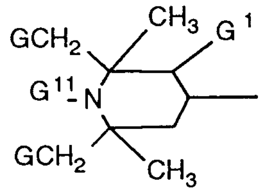

ist, oder $G^{21}$ eine Gruppe der Formel

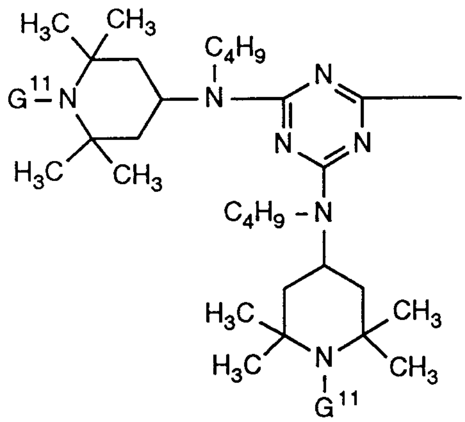

bedeutet;

Amine von besonderem technischem Interesse aus dieser Klasse sind die oben beschriebene Verbindung (76)[ = Amin J] sowie die Verbindungen der Formeln

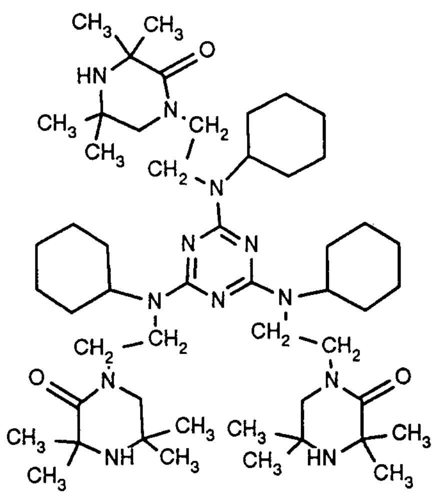

und

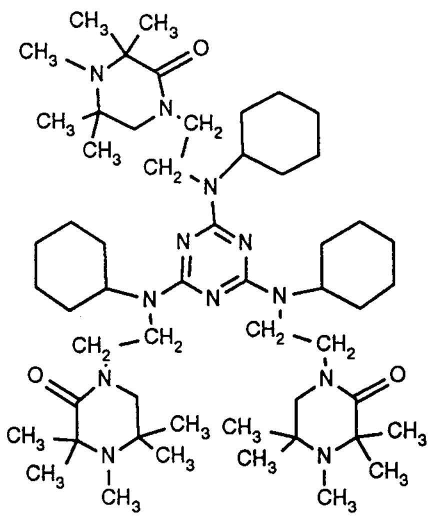

(Amine K und L);

Verbindungen der Formel X, worin n 2 ist, $G^{11}$ Wasserstoff oder Methyl und $G^{14}$ $C_2$-$C_{12}$-Alkylen bedeutet;

ein Amin von besonderem technischem Interesse aus dieser Klasse ist die oben beschriebene Verbindung (100) [= Amin M]; sowie

oligomere Verbindungen mit 2 bis 10 wiederkehrenden Einheiten, wie sie durch Reaktion

(i) von

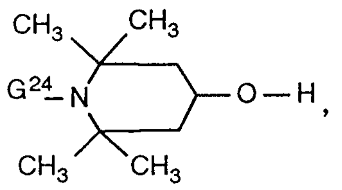

worin $G^{24}$ $C_2$-$C_5$-Hydroxyalkyl bedeutet, mit einer aliphatischen $C_2$-$C_{12}$-Dicarbonsäure oder einem geeigneten reaktiven Derivat wie dem Diester, dem Dichlorid oder dem Anhydrid;
(j) von einem linearen oligomeren Polyester aus einem Dialkohol und Butan-1,2,3,4-tetracarbonsäure mit 2,2,6,6-Tetramethyl-4-hydroxy-piperidin;
(k) von

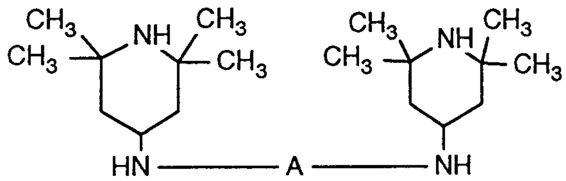

mit

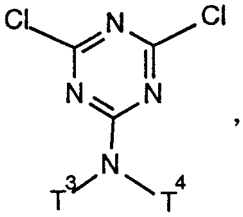

worin A
$C_2$-$C_6$-Alkylen, $T^3$ $C_1$-$C_{18}$-Alkyl oder Cyclohexyl, $T^4$ Wasserstoff oder $C_1$-$C_{18}$-Alkyl, oder $T^3$ und $T^4$ zusammen $C_4$-$C_6$-Alkylen oder $C_3$-$C_5$-Oxaalkylen bedeuten;
(l) von $H_2N$-A-NH-A-$NH_2$ mit

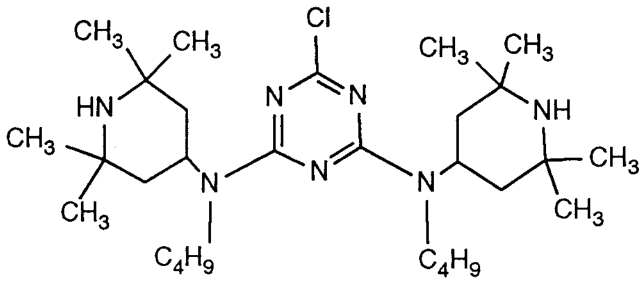

und
Br-A-Br, worin A $C_2$-$C_6$-Alkylen bedeutet;
(m) von Verbindungen der Formel

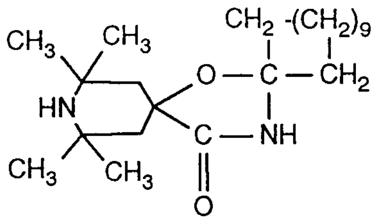

mit Epichlorhydrin;

(n) von

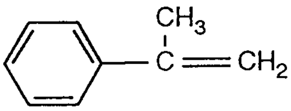

mit

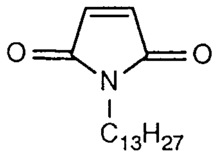

und

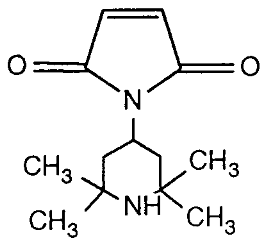

erhältlich sind, sowie solche der Formel

(o)

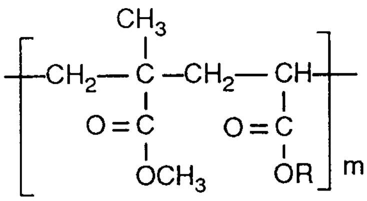

,

worin ca. ein Drittel der Reste R die Bedeutung $-C_2H_5$ haben und die anderen

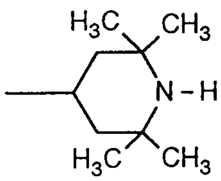

bedeuten und m eine Zahl aus dem Bereich von 2 bis 10 ist;

oligomere Amine von besonderem technischem Interesse sind darunter solche der Formeln (m bezeichnet wiederum eine Zahl aus dem Bereich von 2 bis 10)

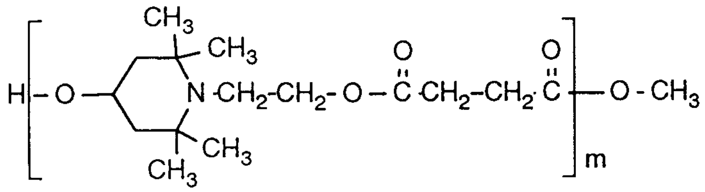 (Amin N);

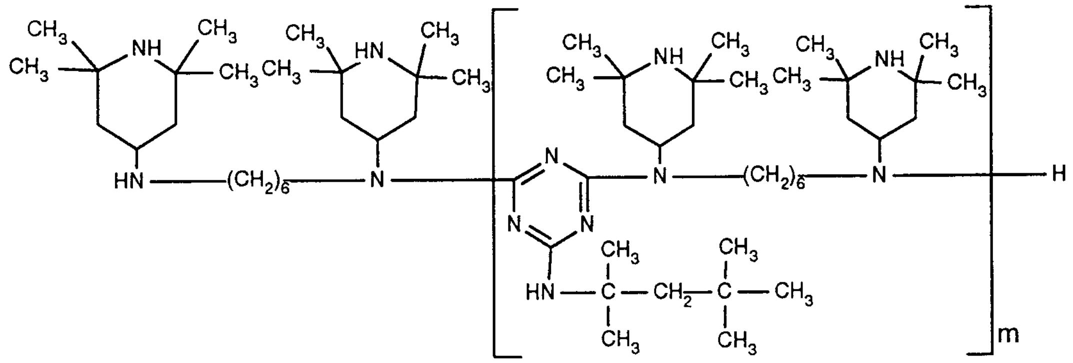

(Amin P);

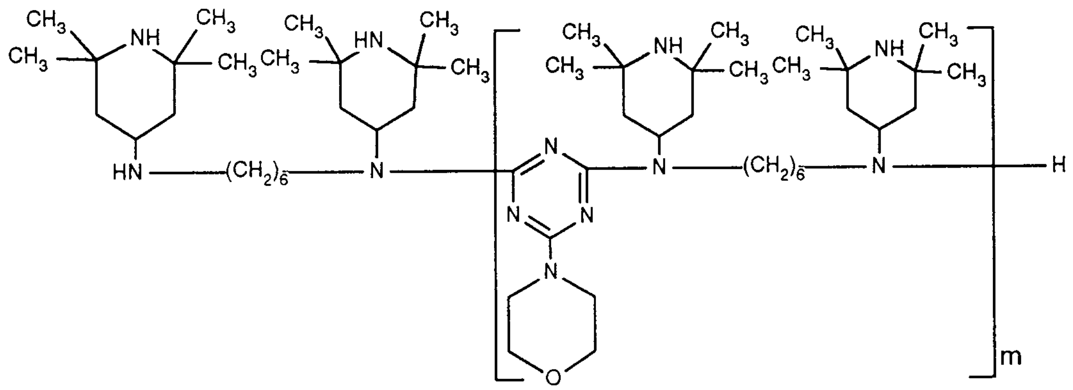

(Amin Q); 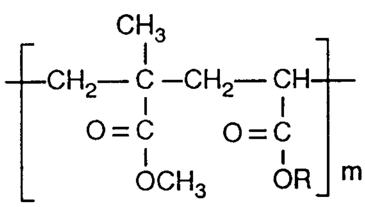 (Amin R),

worin ca. ein Drittel der Reste R die Bedeutung $-C_2H_5$ haben und die anderen

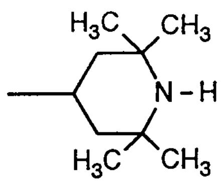

bedeuten; ein linearer Polyester mit 2 bis 10 wiederkehrenden Einheiten aus Butan-1,2,3,4-tetracarbonsäure und einem Dialkohol der Formel

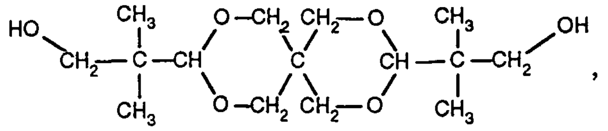

worin die Endgruppen und Seitenketten durch Veresterung der freien Carboxylgruppen mit 2,2,6,6-Tetramethyl-4-hydroxy-piperidin gebildet werden (Amin S); ein Copolymerisat, dessen wiederkehrende Einheit aus 2 Einheiten

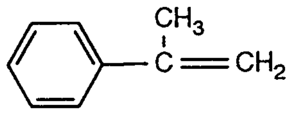

und jeweils 1 Einheit

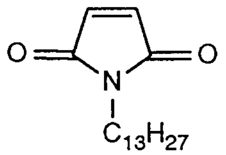
und
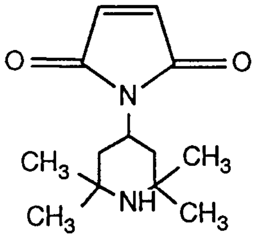

aufgebaut ist (Amin T); das Umsetzungsprodukt von $H_2N\text{-}(CH_2)_2\text{-}NH\text{-}(CH_2)_2\text{-}NH_2$ mit

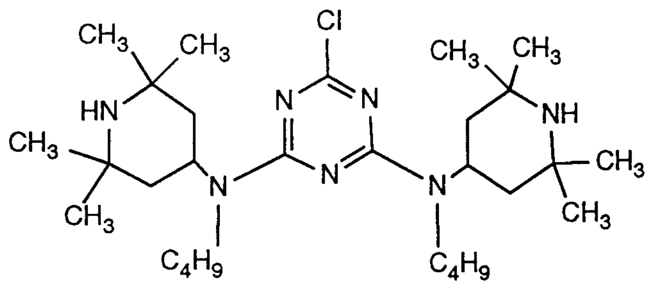

und $Br\text{-}(CH_2)_2\text{-}Br$ (Amin U); sowie das Umsetzungsprodukt der Verbindung der Formel

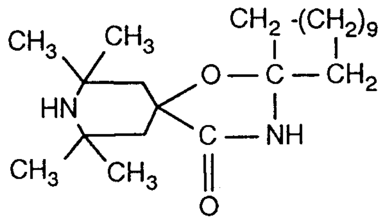

mit Epichlorhydrin (Amin W).

Bei den oligomeren Aminen handelt es sich häufig um Gemische von Verbindungen, die sich bezüglich ihrer Kettenlänge voneinander unterscheiden.

Im erfindungsgemäßen Verfahren ist insbesondere der Zusatz solcher sterisch gehinderten Amine bevorzugt, deren Molekulargewicht bezw. mittleres Molekulargewicht im Bereich von 300 bis 10000, vor allem im Bereich von 1000 bis 10000 liegt. Darunter besonders hervorzuheben sind nochmals diejenigen sterisch gehinderten Amine,

deren Molekulargewicht bezw. mittleres Molekulargewicht im Bereich von 1500 bis 10000, beispielsweise im Bereich von 2000 bis 7500 liegt.

Amine mit besonders herausragender Eignung für den Einsatz im erfindungsgemäßen Verfahren sind die Verbindungen der Formeln

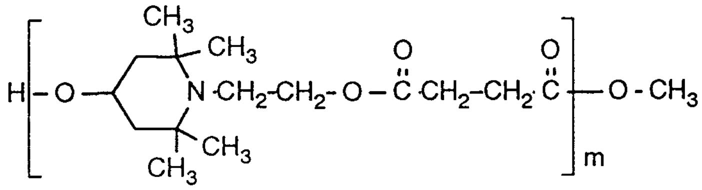 (Amin N),

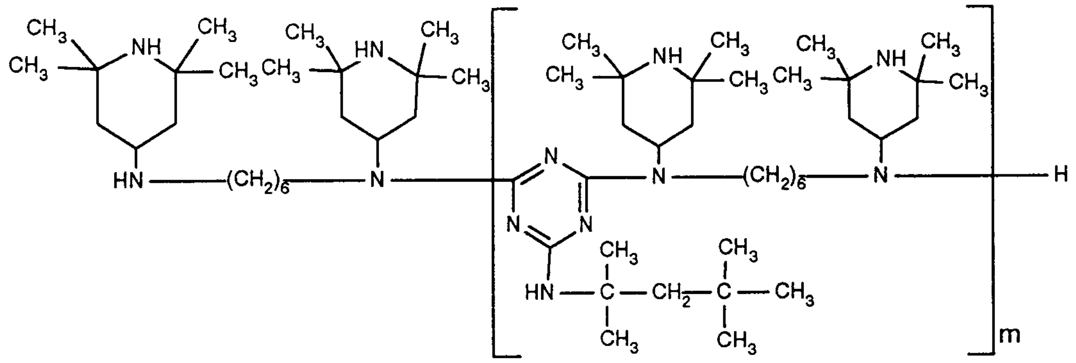

(Amin P);

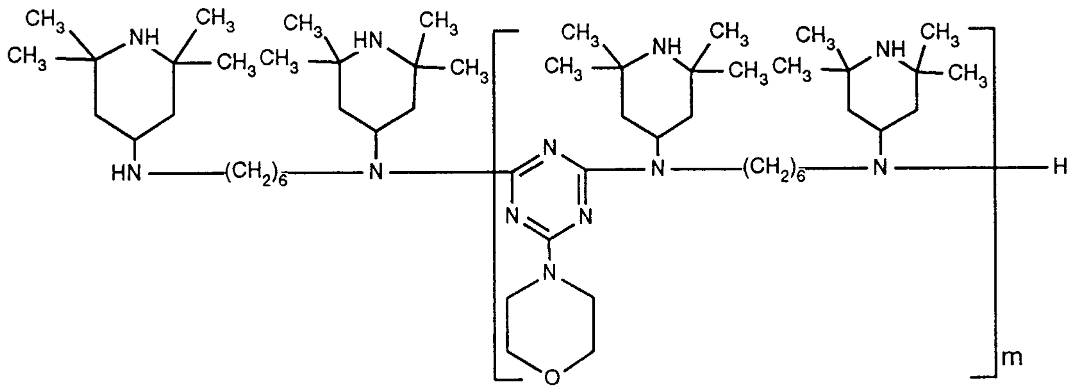

(Amin Q);

m bezeichnet jeweils eine Zahl aus dem Bereich von 2 bis 10.

Die genannten sterisch gehinderten Amine sind bekannte Verbindungen; viele davon sind kommerziell erhältlich.

Im erfindungsgemäßen Verfahren werden vorzugsweise Phosphite oder Phosphonite stabilisiert, welche einer der Formeln (1) bis (7) entsprechen,

(1) 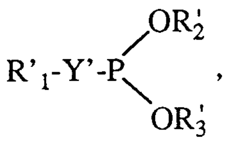

(2) 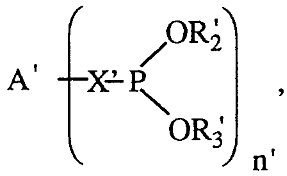

(3) 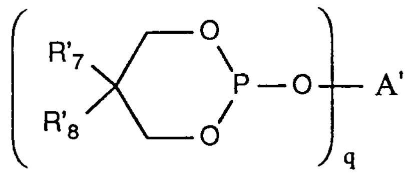

(4) 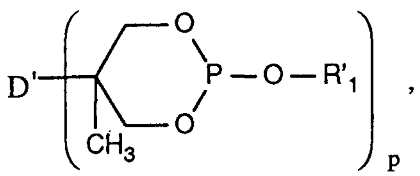

(5) 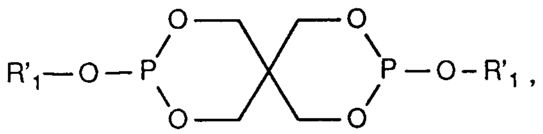

(6) 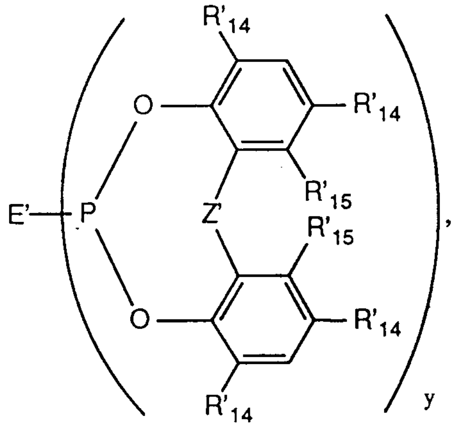

(7) 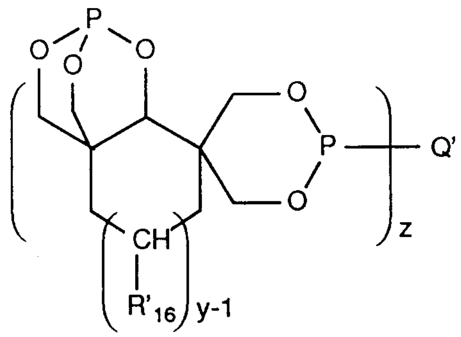

worin die Indices ganzzahlig sind und

n' für 2, 3 oder 4; p für 1 oder 2; q für 2 oder 3; r für 4 bis 12; y für 1, 2 oder 3; und z für 1 bis 6 steht;
A', wenn n' 2 ist, Alkylen mit 2 bis 18 Kohlenstoffatomen; durch -S-, -O- oder -NR'$_4$-unterbrochenes Alkylen mit 2 bis 12 Kohlenstoffatomen; ein Rest einer der Formeln

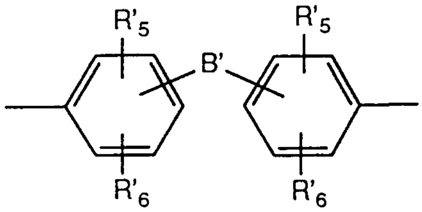

oder

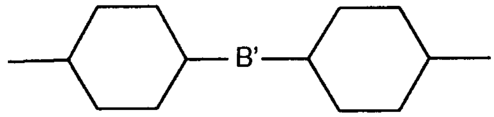

oder Phenylen ist;

A', wenn n' 3 ist, ein Rest der Formel $-C_rH_{2r-1}-$ ist;

A', wenn n' 4 ist, den Rest der Formel $C(CH_2)_4$ bedeutet;

A'' die Bedeutung von A', wenn n' 2 ist, hat;

B' einen Rest der Formel $-CH_2-$; $-CHR'_4-$; $-CR'_1R'_4-$; -S- oder eine direkte Bindung darstellt; oder $C_5$-$C_7$-Cycloalkyliden; oder mit 1 bis 4 $C_1$-$C_4$-Alkylresten in Position 3, 4 und/oder 5 substituiertes Cyclohexyliden bedeutet;

D', wenn p 1 ist, Methyl und, wenn p 2 ist, $-CH_2OCH_2-$ bedeutet;

E', wenn y 1 ist, Alkyl mit 1 bis 18 Kohlenstoffatomen, ein Rest der Formel $-OR'_1$ oder Halogen ist;

E', wenn y 2 ist, ein Rest der Formel -O-A''-O- ist;

E', wenn y 3 ist, ein Rest der Formel $R'_4\ C(CH_2O)_3$ ist;

Q' für den Rest eines mindestens z-wertigen Alkohols oder Phenols steht, wobei dieser über das (die) alkoholische(n) bzw. phenolische(n) O-Atom(e) an das (die) P-Atom(e) gebunden ist;

$R'_1$, $R'_2$ und $R'_3$ unabhängig voneinander Alkyl mit 1 bis 30 Kohlenstoffatomen; mit Halogen, $-COOR_4'$, -CN oder $-CONR_4'R_4'$ substituiertes Alkyl mit 1 bis 18 Kohlenstoffatomen; durch -S-, -O- oder $-NR'_4-$ unterbrochenes Alkyl mit 2 bis 18 Kohlenstoffatomen; Phenyl-$C_1$-$C_4$-alkyl; Cycloalkyl mit 5 bis 12 Kohlenstoffatomen; Phenyl oder Naphthyl; mit Halogen, 1 bis 3 Alkylresten oder Alkoxyresten mit insgesamt 1 bis 18 Kohlenstoffatomen oder mit Phenyl-$C_1$-$C_4$-alkyl substituiertes Phenyl oder Naphthyl; oder ein Rest der Formel

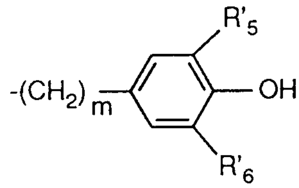

sind, worin m eine ganze Zahl aus dem Bereich 3 bis 6 bedeutet;

$R'_4$ beziehungsweise die Reste $R_4'$ unabhängig voneinander Wasserstoff; Alkyl mit 1 bis 18 Kohlenstoffatomen; Cycloalkyl mit 5 bis 12 Kohlenstoffatomen; oder Phenylalkyl mit 1 bis 4 Kohlenstoffatomen im Alkylteil;

$R'_5$ und $R'_6$ unabhängig voneinander Wasserstoff; Alkyl mit 1 bis 8 Kohlenstoffatomen oder Cycloalkyl mit 5 oder 6 Kohlenstoffatomen sind;

$R'_7$ und $R'_8$, im Fall q = 2, unabhängig voneinander $C_1$-$C_4$-Alkyl oder zusammen einen 2,3-Dehydro-pentamethylenrest darstellen; und

$R'_7$ und $R'_8$, im Fall q = 3, Methyl bedeuten; die Substituenten $R'_{14}$ unabhängig voneinander Wasserstoff; Alkyl mit 1 bis 9 Kohlenstoffatomen oder Cyclohexyl sind;

die Substituenten $R'_{15}$ unabhängig voneinander Wasserstoff oder Methyl; und

$R'_{16}$ Wasserstoff oder $C_1$-$C_4$-Alkyl darstellt und im Fall, daß mehrere Reste $R'_{16}$ vorhanden sind, die Reste $R'_{16}$ gleich oder verschieden sind;

X' und Y' jeweils eine direkte Bindung oder -O- darstellen; und

Z' eine direkte Bindung; $-CH_2-$; $-C(R'_{16})_2-$ oder -S- ist.

Besonders bevorzugt ist ein Verfahren, worin das Phosphit oder Phosphonit eines der Formeln (1), (2), (5) oder (6) ist, worin n' für die Zahl 2 und y für die Zahl 1 oder 2 steht; A' Alkylen mit 2 bis 18 Kohlenstoffatomen; p-Phenylen oder p-Biphenylen ist; E' im Fall y = 1 $C_1$-$C_{18}$-Alkyl, $-OR_1$ oder Fluor; und im Fall y = 2 p-Biphenylen ist; $R'_1$, $R'_2$ und $R'_3$ unabhängig voneinander Alkyl mit 1 bis 18 Kohlenstoffatomen; Phenyl-$C_1$-$C_4$-alkyl; Cyclohexyl; Phenyl; mit 1 bis 3 Alkylresten mit insgesamt 1 bis 18 Kohlenstoffatomen substituiertes Phenyl bedeutet; die Substituenten $R'_{14}$ unabhängig voneinander Wasserstoff oder Alkyl mit 1 bis 9 Kohlenstoffatomen sind; $R'_{15}$ Wasserstoff oder Methyl ist; X' eine direkte Bindung; Y' -O-; und Z' eine direkte Bindung oder $-CH(R'_{16})-$ ist.

Ein Verfahren zum Stabilisieren eines Phosphits oder Phosphonits einer der Formeln (1), (2), (5) oder (6), worin

n' für die Zahl 2 und y für die Zahl 1 steht;
A' p-Biphenylen ist;
E' $C_1$-$C_{18}$-Alkoxy oder Fluor ist;
$R'_1$, $R'_2$ und $R'_3$ unabhängig voneinander Alkyl mit 1 bis 18 Kohlenstoffatomen; mit 2 oder 3 Alkylresten mit insgesamt 2 bis 12 Kohlenstoffatomen substituiertes Phenyl bedeutet;
die Substituenten $R'_{14}$ unabhängig voneinander Methyl oder tert.-Butyl sind;
$R'_{15}$ Wasserstoff ist;
X' eine direkte Bindung;
Y' -O-; und
Z' eine direkte Bindung, $-CH_2-$ oder $-CH(CH_3)-$ ist,
ist von besonderem technischem Interesse.

Besonders bevorzugt sind Phosphite, insbesondere solche der Formeln (1) und (5).

Die folgenden Verbindungen sind Beispiele für Phosphite und Phosphonite, deren Stabilität gegenüber Hydrolyse sich durch das erfindungsgemäße Verfahren besonders vorteilhaft verbessern läßt:

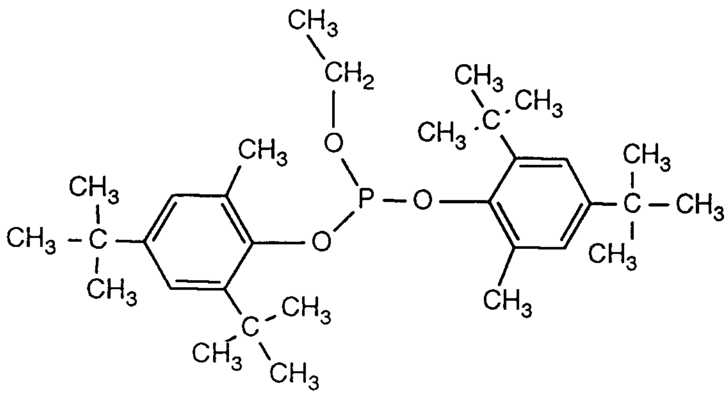

(Ph-1);

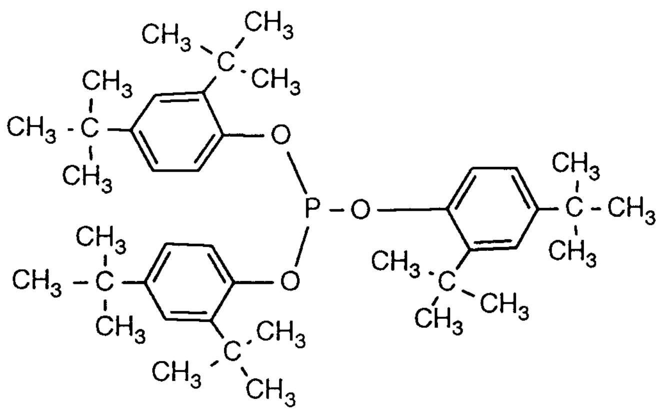

(Ph-2);

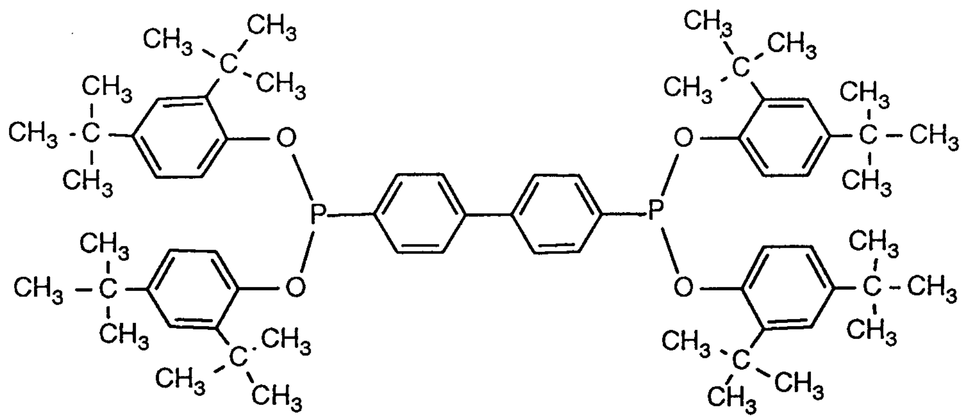

(Ph-3);

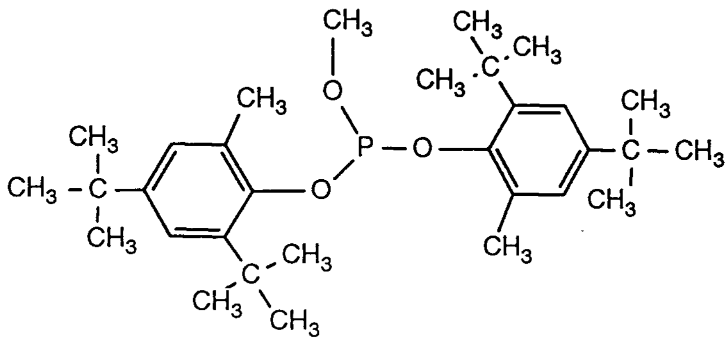

(Ph-4);

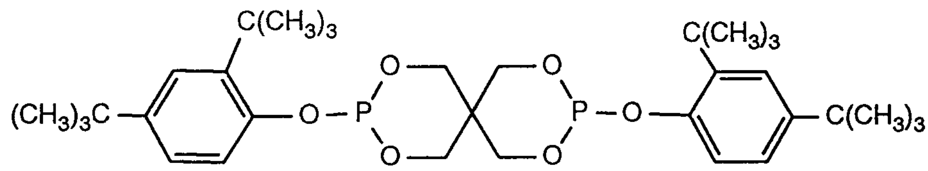

(Ph-5);

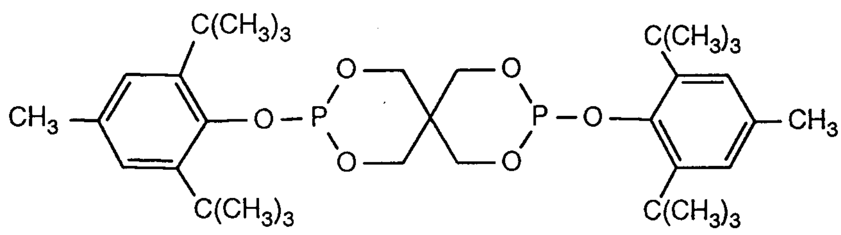

(Ph-6);

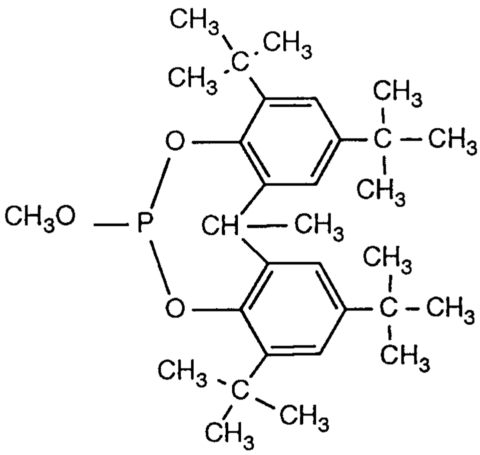

(Ph-7);

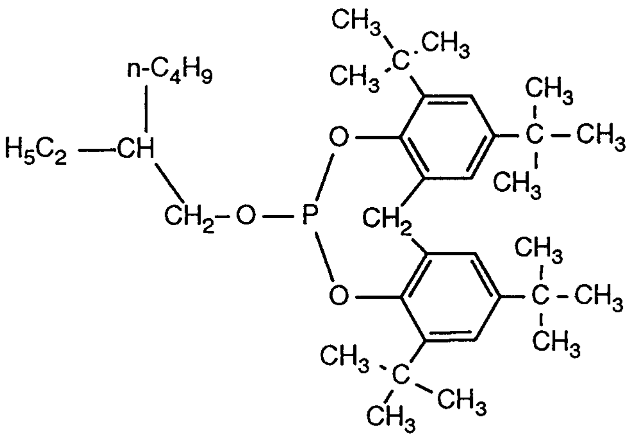

(Ph-8);

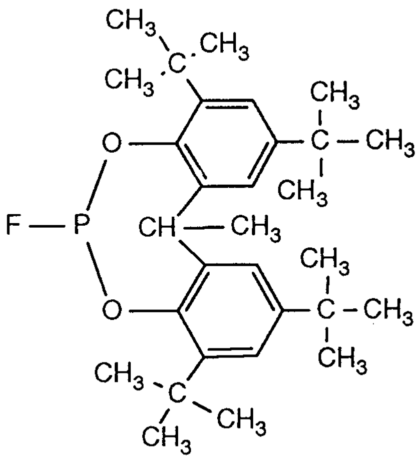

(Ph-9);

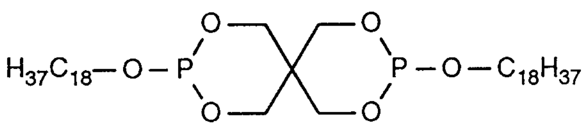

(Ph-10).

Die genannten Phosphite und Phosphonite sind bekannte Verbindungen; sie sind zum Teil kommerziell erhältlich.

Einige kommerzielle Verbindungen liegen als Verbindungsgemische oder in vorstabilisierter Form vor; als Vorstabilisierung wird häufig ein konventionelles Amin in einer Konzentration von ca. 1 % eingesetzt. Auch die Hydrolysestabilität derartiger Produkte läßt sich mit Hilfe des erfindungsgemäßen Verfahrens deutlich verbessern.

Die Produkte aus dem erfindungsgemäßen Verfahren lassen sich vorteilhaft als Stabilisatoren für organisches Material, besonders organische Polymere, beispielsweise synthetische Polymere, gegen den schädigenden Einfluß von Wärme, Sauerstoff und/oder Licht verwenden. Beispiele für solche Polymere sind etwa der US-A-4 855 345, Spalte 4, Zeile 63, bis Spalte 7, Zeile 54, zu entnehmen.

Eine Zusammensetzung enthaltend (a) 80 bis 99,9 Gew.-% organisches Phosphit oder Phosphonit und (b) 0,1 bis 20 Gew.-% (jeweils bezogen auf das Gewicht der Zusammensetzung) eines sterisch gehinderten Amins bildet ebenfalls einen Gegenstand der Erfindung. Bevorzugt ist die Komponente (a) bei 20°C ein Feststoff.

Vorzugsweise enthält die erfindungsgemäße Zusammensetzung neben den Komponenten (a) und (b) keine weiteren Hauptkomponenten, insbesondere keine organischen Polymere mit einem Molekulargewicht größer als 5000. Besonders bevorzugt sind Zusammensetzungen, die neben den Komponenten (a) und (b) keine Verbindungen enthalten, deren Molekulargewicht größer als 2000 ist.

In den erfindungsgemäßen Zusammensetzungen ist das sterisch gehinderte Amin häufig in einer Menge von 0,1 bis 13 Gew.-% enthalten; bevorzugt ist eine Zusammensetzung, die das sterisch gehinderte Amin in einer Menge von 0,1 bis 7,4; besonders 0,1 bis 4,8; vor allem in einer Menge von 0,2 bis 2,4 Gew.-% (jeweils bezogen auf das Gewicht der Zusammensetzung) enthält.

Die erfindungsgemäß stabilisierten Phosphite und Phosphonite zeichnen sich durch ihre hervorragende Beständigkeit gegen Hydrolyse aus und weisen eine gute Lagerstabilität auch bei hoher Luftfeuchtigkeit auf.

Die Verwendung von sterisch gehinderten Aminen, insbesondere von sterisch gehinderten Aminen mit einem Molekulargewicht oder mittleren Molekulargewicht im Bereich von 1500 bis 10000, als Stabilisator für organische Phosphite und/oder Phosphonite gegen Hydrolyse, insbesondere gegen Hydrolyse bei Lagerung im Kontakt mit feuchter Luft, bildet daher einen weiteren Gegenstand der Erfindung. Bevorzugt ist die Verwendung als Hydrolysestabilisator für organische Phosphite. Zur Erzielung der gewünschten verbesserten Hydrolysestabilität können beliebige Mengen an Amin verwendet werden, beispielsweise 0,01 bis 200 Gew-%, besonders 0,1 bis 100 Gew-%, vor allem 0,1 bis 25 Gew-%, bezogen auf die Menge an Phosphit oder Phosphonit.

Die Erfindung beinhaltet gleichzeitig eine Methode zur Lagerung von festen organischen Phosphiten oder Phosphoniten, dadurch gekennzeichnet, daß man den Phosphiten oder Phosphoniten 0,1 bis 25; im Allgemeinen 0,1 bis 15, vorzugsweise 0,1 bis 8; insbesondere 0,1 bis 5; vor allem 0,2 bis 2,5 Gew.-% (bezogen auf Phosphit bezw. Phosphonit) eines sterisch gehinderten Amins beimischt.

Die nachfolgenden Beispiele illustrieren das erfindungsgemäße Verfahren weiter. Alle Angaben in Teilen oder Prozenten in den Beispielen beziehen sich auf das Gesamtgewicht des eingesetzten Phosphit bezw. Phosphonit, soweit nichts anderes angegeben ist. Die Strukturformeln der in den Beispielen verwendeten Phosphite und Amine sind weiter oben im Text aufgeführt.

Beispiel 1: 300 g des Phosphits Ph-1 werden in 300 g Isopropanol bei 50°C gelöst. Der Lösung werden 15 g Amin P unter Rühren zugemischt; anschließend wird auf 10-15°C gekühlt, wobei Phosphit zusammen mit Amin auskristallisiert. Daraufhin wird das kristalline Produkt abfiltriert und bei 60°C unter reduziertem Druck getrocknet.

Die Elementaranalyse ergibt für das trockene Produkt einen Gehalt von 1,6 Gew.-% Amin P (bezogen auf Phosphit).

Eine als Vergleich dienende Probe wird ohne Zugabe eines Amins kristallisiert.

Eine weitere Vergleichsprobe mit 300 g Ph-1 wird mit 60 g des zur Hydrolysestabilisierung bekannten Triisopropanolamin versetzt und kristallisiert wie oben beschrieben.

Gleiche Anteile des Produktes werden anschließend folgenden Tests auf Hydrolysebeständigkeit unterworfen:

a) Bei einer Lagerung bei 50°C und 75 % Luftfeuchtigkeit wird die Zeit gemessen, zu der visuell ein beginnendes Zerfließen des anfänglichen Pulvers (Übergang p-k) festzustellen ist, sowie die Zeitdauer, bis zu der das Material flüssig ist und eine Klare Lösung bildet (Übergang k-f).

b) Nach 8 Stunden Lagerung bei 70°C und 100 % Luftfeuchtigkeit wird mit Hilfe der Flüssigchromatographie der Gehalt an Phosphit Ph-1 ermittelt; in der Tabelle angegeben ist der Prozentsatz des zersetzten (hydrolysierten) Phosphit.

Die Ergebnisse sind der nachfolgenden Tabelle 1 zu entnehmen. Alle Prozentangaben beziehen sich auf das Gewicht des zu Testbeginn vorhandenen Phosphit.

Tab. 1

| Stabilisierung des Phosphits Ph-1 mit dem sterisch gehinderten Amin P bezw. mit Triisopropanolamin (TIPA) | | | |
|---|---|---|---|
| Stabilisator: | ohne | TIPA | Amin P |
| Menge eingesetzt: | 0 | 20 % | 5 % |
| Gehalt i.Feststoff: | 0 | 1,6 % | 1,6 % |
| a) Übergang p-k: | 5 h | 56 h | 80 h |
| a) Übergang k-f: | 27 h | 120 h | 168 h |
| b) % Zersetzung: | 85 %* | 22,1 % | 9,4 % |

* nach 2 Stunden

Beispiele 2-9: Die Verbindung Ph-1 wird mit den Aminen C, E, H, J, K, P, Q und U entsprechend der in Beispiel 1 beschriebenen Methode stabilisiert. Das erhaltene Produkt wird auf Hydrolysebeständigkeit getestet, wie in Beispiel 1 beschrieben.

Beispiele 10-11: Die Verbindung Ph-2 wird mit den Aminen N und O entsprechend der in Beispiel 1 beschriebenen Methode stabilisiert. Das erhaltene Produkt wird auf Hydrolysebeständigkeit getestet, wie in Beispiel 1 beschrieben.

Beispiele 12-15: Die Verbindung Ph-3 wird mit den Aminen C, J, N und O entsprechend der in Beispiel 1 beschriebenen Methode stabilisiert. Das erhaltene Produkt wird auf Hydrolysebeständigkeit getestet, wie in Beispiel 1 beschrieben.

Beispiele 16-17: Die Verbindung Ph-5 wird mit den Aminen N und O entsprechend der in Beispiel 1 beschriebenen Methode stabilisiert. Das erhaltene Produkt wird auf Hydrolysebeständigkeit getestet, wie in Beispiel 1 beschrieben.

Beispiele 18-19: Die Verbindung Ph-6 wird mit den Aminen N und O entsprechend der in Beispiel 1 beschriebenen Methode stabilisiert. Das erhaltene Produkt wird auf Hydrolysebeständigkeit getestet, wie in Beispiel 1 beschrieben.

In allen Beispielen zeigt sich die hervorragende Hydrolysebeständigkeit der erfindungsgemäß stabilisierten Phosphite.

**Patentansprüche**

**1.** Verfahren zur Stabilisierung eines organischen Phosphits oder Phosphonits oder eines Gemisches organischer Phosphite oder Phosphonite gegen Hydrolyse, dadurch gekennzeichnet, daß man als Stabilisator ein cyclisches sterisch gehindertes Amin zusetzt, das mindestens eine Gruppe der Formeln II oder III

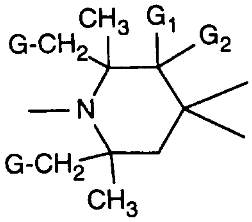

(II)

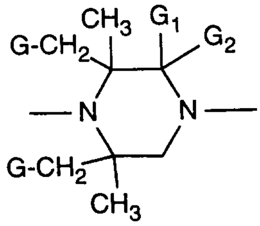

(III)

enthält, worin G Wasserstoff oder Methyl ist und $G_1$ und $G_2$ Wasserstoff, Methyl oder gemeinsam =O bedeuten,
so daß das stabilisierte Phosphit oder Phosphonit 0,1 bis 25 Gew.-% des sterisch gehinderten Amins (bezogen auf Phosphit bezw. Phosphonit) enthält.

**2.** Verfahren gemäß Anspruch 1, dadurch gekennzeichnet, daß das sterisch gehinderte Amin in einer Menge von 0,1 bis 8 Gew.-% bezogen auf Phosphit bezw. Phosphonit im Endprodukt enthalten ist.

**3.** Verfahren gemäß Anspruch 1, worin das sterisch gehinderte Amin der Lösung oder Schmelze des organischen Phosphits bezw. Phosphonits vor dessen Kristallisation zugemischt wird.

**4.** Verfahren gemäß Anspruch 1, worin dem Phosphit bezw. Phosphonit als weitere Komponenten keine organischen Polymere zugesetzt werden.

**5.** Verfahren gemäß Anspruch 1, worin das Molekulargewicht des sterisch gehinderten Amins im Bereich 1500 bis 10000 liegt.

**6.** Zusammensetzung enthaltend (a) 80 bis 99,9 Gew.-% organisches Phosphit oder Phosphonit und (b) 0,1 bis 20 Gew.-% (jeweils bezogen auf das Gewicht der Zusammensetzung) eines sterisch gehinderten Amins, das mindestens eine Gruppe der Formeln II oder III gemäß Anspruch 1 enthält.

**7.** Zusammensetzung gemäß Anspruch 6, welche neben Phosphit bezw. Phosphonit und sterisch gehindertem Amin keine organischen Polymere mit einem Molekulargewicht größer als 5000 enthält.

**8.** Zusammensetzung gemäß Anspruch 6, enthaltend das sterisch gehinderte Amin in einer Menge von 0,1 bis 7,4 Gew.-% bezogen auf das Gewicht der Zusammensetzung.

**9.** Verwendung eines sterisch gehinderten Amins enthaltend mindestens eine Gruppe der Formeln II oder III gemäß Anspruch 1 als Hydrolysestabilisator für organisches Phosphit oder Phosphonit.

**10.** Methode zur Lagerung von festen organischen Phosphiten oder Phosphoniten, dadurch gekennzeichnet, daß man den Phosphiten oder Phosphoniten 0,1 bis 25 Gew.-% (bezogen auf Phosphit bezw. Phosphonit) eines sterisch gehinderten Amins beimischt, das mindestens eine Gruppe der Formeln II oder III gemäß Anspruch 1 enthält.

## Claims

1. A process for stabilizing an organic or phosphonite or a mixture of organic phosphites or phosphonites against hydrolysis, characterized in that it comprises adding, as the stabilizer, a cyclic sterically hindered amine containing at least one group of the formulae II or III

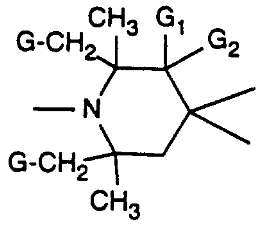

(II)

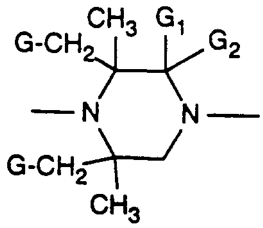

(III)

in which G is hydrogen or methyl and $G_1$ and $G_2$ are hydrogen, methyl or together are =O, so that the stabilized phosphite or phosphonite contains 0.1 to 25% by weight of the sterically hindered amine (relative to the phosphite or phosphonite).

2. A process according to claim 1, characterized in that the sterically hindered amine is present in an amount of 0.1 to 8% by weight, relative to the phosphite or phosphonite in the end product.

3. A process according to claim 1, wherein the sterically hindered amine is admixed to the solution or melt of the organic phosphite or phosphonite prior to its crystallization.

4. A process according to claim 1, wherein no organic polymers are added to the phosphite or phosphonite as further components.

5. A process according to claim 1, wherein the molecular weight of the sterically hindered amine is in the range 1500 to 10,000.

6. A composition comprising (a) 80 to 99.9% by weight of organic phosphite or phosphonite and (b) 0.1 to 20% by weight (in each case relative to the weight of the composition) of a sterically hindered amine containing at least one group of the formulae II or III according to claim 1.

7. A composition according to claim 6, including, besides phosphite or phosphonite and sterically hindered amine, no organic polymers having a molecular weight of greater than 5000.

8. A composition according to claim 6, including the sterically hindered amine in an amount of 0.1 to 7.4% by weight, relative to the weight of the composition.

9. The use of a sterically hindered amine containing at least one group of the formulae II or III according to claim 1.

10. A method of storing solid organic phosphites or phosphonites, which comprises admixing the phosphites or phosphonites with 0.1 to 25% by weight (relative to the phosphite or phosphonite) of a sterically hindered amine containing at least one group of the formulae II or III according to claim 1.

## Revendications

1. Procédé pour la stabilisation d'un phosphite ou phosphonite organique ou d'un mélange de phosphites ou phosphonites organiques contre l'hydrolyse, caractérisé en ce qu'on ajoute une amine cyclique à encombrement stérique comme stabilisant, laquelle comporte au moins un groupe de formules II ou III

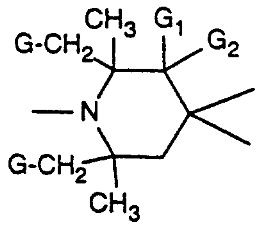

(II)

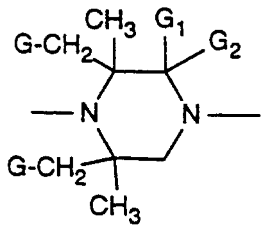

(III)

où G représente un atome d'hydrogène ou un groupe méthyle, $G_1$ et $G_2$ représentent des atomes d'hydrogène ou des groupes méthyle ou ensemble un groupe =O ;
de façon que le phosphite ou le phosphonite stabilisé contienne de 0,1 à 25% en masse de l'amine à encombrement stérique (par rapport au phosphite ou phosphonite).

2. Procédé selon la revendication 1, caractérisé en ce que l'amine à encombrement stérique est contenue en une quantité de 0,1 à 8% en masse par rapport au phosphite ou phosphonite dans le produit final.

3. Procédé selon la revendication 1, caractérisé en ce qu'on ajoute l'amine à encombrement stérique par mélange à la solution ou à la matière fondue, du phosphite ou phosphonite organique avant sa cristallisation.

4. Procédé selon la revendication 1, où on n'ajoute pas au phosphite ou au phosphonite de polymères organiques en tant qu'autres composants.

5. Procédé selon la revendication 1, où la masse molaire de l'amine à encombrement stérique se trouve dans le domaine de 1500 à 10000.

6. Composition contenant (a) de 80 à 99,9% en masse d'un phosphite ou phosphonite organique et (b) de 0,1 à 20% en masse (à chaque fois par rapport au poids de la composition) d'une amine à encombrement stérique, lequel contient au moins un groupe de formules II ou III selon la revendication 1.

7. Composition selon la revendication 6, ne contenant pas, outre le phosphate respectivement le phosphonite et une amine à encombrement stérique, de polymères organiques ayant une masse molaire supérieure à 5000.

8. Composition selon la revendication 6, contenant l'amine à encombrement stérique en une quantité de 0,1 à 7,4% en masse par rapport au poids de la composition.

9. Utilisation d'une amine à encombrement stérique contenant au moins un groupe de formules II ou III selon la revendication 1 en tant que stabilisant contre l'hydrolyse de phosphites ou de phosphonites organiques.

10. Méthode de stockage de phosphites ou phosphonites organiques, caractérisée en ce que l'on ajoute par mélange

aux phosphites ou aux phosphonites 0,1 à 25% en masse (par rapport au phosphite ou phosphonite) d'une amine à encombrement stérique laquelle présente au moins un groupe de formules II ou III.